(19) Europäisches Patentamt
European Patent Office
Office européen des brevets

(11) EP 2 269 379 B1

(12) EUROPEAN PATENT SPECIFICATION

(45) Date of publication and mention
of the grant of the patent:
27.02.2019 Bulletin 2019/09

(51) Int Cl.:
H04N 19/105 (2014.01)  H04N 19/139 (2014.01)
H04N 19/70 (2014.01)   H04N 19/46 (2014.01)
H04N 19/51 (2014.01)   H04N 19/61 (2014.01)
H04N 19/573 (2014.01)  H04N 19/176 (2014.01)

(21) Application number: 09730583.3

(22) Date of filing: 07.04.2009

(86) International application number:
PCT/US2009/002177

(87) International publication number:
WO 2009/126260 (15.10.2009 Gazette 2009/42)

(54) **METHODS AND APPARATUS FOR TEMPLATE MATCHING PREDICTION (TMP) IN VIDEO ENCODING AND DECODING**

VERFAHREN UND VORRICHTUNG FÜR VORLAGENANPASSUNGSVORHERSAGE IN DER VIDEOKODIERUNG UND -DEKODIERUNG

PROCÉDÉS ET APPAREIL PERMETTANT DE PRÉVOIR UNE CONCORDANCE DE GABARIT (TMP) DANS LE CODAGE ET DÉCODAGE DE DONNÉES VIDÉO

(84) Designated Contracting States:
AT BE BG CH CY CZ DE DK EE ES FI FR GB GR HR HU IE IS IT LI LT LU LV MC MK MT NL NO PL PT RO SE SI SK TR

(30) Priority: 11.04.2008 US 44193 P

(43) Date of publication of application:
05.01.2011 Bulletin 2011/01

(73) Proprietor: InterDigital Madison Patent Holdings
75017 Paris (FR)

(72) Inventors:
• ZHENG, Yunfei
  San Diego
  CA 92130 (US)
• DIVORRA ESCODA, Oscar
  E-08028 Barcelona (ES)
• YIN, Peng
  Plainsboro
  NJ 08536 (US)
• SOLE, Joel
  Plainsboro
  NJ 08536 (US)

(74) Representative: Hofstetter, Schurack & Partner
Patent- und Rechtsanwaltskanzlei
PartG mbB
Balanstrasse 57
81541 München (DE)

(56) References cited:
WO-A-99/26416     WO-A1-2009/110672

• KAMP S ET AL: "Decoder-side MV derivation with multiple ref pics" 33. VCEG MEETING; 83. MPEG MEETING; 12-1-2008 - 13-1-2008; ANTALYA; (VIDEO CODING EXPERTS GROUP OF ITU-T SG.16),, no. VCEG-AH15, 12 January 2008 (2008-01-12), XP030003553
• CHEN C-S ET AL: "Temporal Error Concealment Algorithm by Recursive Block-Matching Principle" IEEE TRANSACTIONS ON CIRCUITS AND SYSTEMS FOR VIDEO TECHNOLOGY, IEEE SERVICE CENTER, PISCATAWAY, NJ, US, vol. 15, no. 11, 1 November 2005 (2005-11-01), pages 1385-1393, XP011141201 ISSN: 1051-8215
• YOSHINORI SUZUKI ET AL: "Inter Frame Coding with Template Matching Averaging" IMAGE PROCESSING, 2007. ICIP 2007. IEEE INTERNATIONAL CONFERENCE ON, IEEE, PI, 1 September 2007 (2007-09-01), pages III-409, XP031158091 ISBN: 978-1-4244-1436-9

- TANG CHENG-YUAN ET AL: "Robust two-stage approach for image motion estimation" ELECTRONICS LETTERS, IEE STEVENAGE, GB, vol. 34, no. 11, 28 May 1998 (1998-05-28), pages 1091-1093, XP006009838 ISSN: 0013-5194
- SEILER J ET AL: "Spatio-temporal prediction in video coding by spatially refined motion compensation" PROCEEDINGS OF IEEE INTERNATIONAL CONFERENCE ON IMAGE PROCESSING, 12 October 2008 (2008-10-12), - 12 October 2008 (2008-10-12) pages 2788-2791, XP002542328 San Diego, USA

**Description**

CROSS-REFERENCE TO RELATED APPLICATIONS

This application claims the benefit of U.S. Provisional Application Serial No. 61/044,193 (Attorney Docket No. PU080048), filed 11 April 2018.

TECHNICAL FIELD

The present principles relate generally to video encoding and decoding and, more particularly, to methods and apparatus for template matching prediction (TMP) in video encoding and decoding.

BACKGROUND

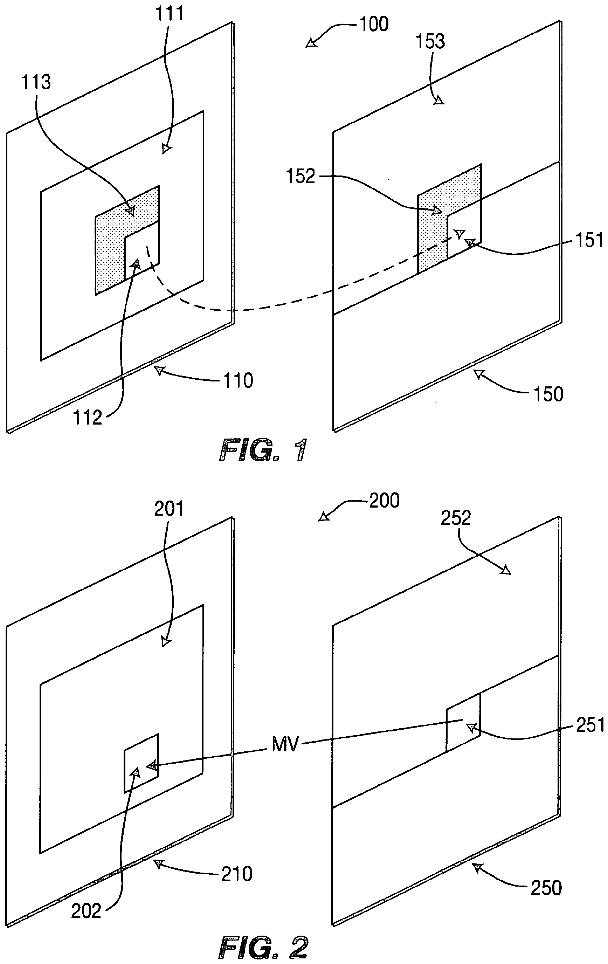

Template matching prediction (TMP), used in video coding and decoding schemes, can create gains in coding efficiency for inter-prediction and/or intra-prediction by avoiding transmission of motion vectors/displaced vectors. However, the prediction performance of template matching prediction is highly dependent on the correlation between the target block and its corresponding template. It is well known in the art to use the reconstructed pixels surrounding the target block, on the top and/or to the left, as shown in FIG. 1. Turning to FIG. 1, an example of an implicit motion estimation scheme involving template matching prediction is indicated generally by the reference numeral 100. The implicit motion estimation scheme 100 involves a reconstructed reference frame 110 having a search region 111, a prediction 112 within the search region 111, and a neighborhood 113 with respect to the prediction 112. The implicit motion estimation scheme 100 also involves a current frame 150 having a target block 151, a template 152 with respect to the target block 151, and a reconstructed region 153. However, utilizing template matching prediction in such a manner lessens encoder and decoder performance, especially when the template has a lower correlation with the targeted signal.

**Inter-Prediction**

In video coding, inter-prediction is extensively employed to reduce temporal redundancy between the target frame and reference frames. Motion estimation and compensation are components for inter-prediction. In general, we can classify motion models and corresponding motion estimation techniques into two categories. The first category is the so-called explicit motion estimation, or explicit motion model, where motion vectors are explicitly transmitted. The second category is the so-called implicit motion estimation, where motion information is estimated based on reconstructed pixels, so that no motion vectors are required to be transmitted.

The first category, based on block matching techniques, as shown in FIG. 2, is well adopted in current video coding standards such as, for example, the International Organization for Standardization/International Electrotechnical Commission (ISO/IEC) Moving Picture Experts Group-4 (MPEG-4) Part 10 Advanced Video Coding (AVC) standard/International Telecommunication Union, Telecommunication Sector (ITU-T) H.264 Recommendation (hereinafter the "MPEG-4 AVC Standard"). Turning to FIG. 2, an example of an explicit motion estimation scheme involving block matching is indicated generally by the reference numeral 200. The explicit motion estimation scheme 200 involves a reconstructed reference frame 210 having a search region 201 and a prediction 202 within the search region 201. The implicit motion estimation scheme 200 also involves a current frame 250 having a target block 251 and a reconstructed region 252. A motion vector MV is used to denote the motion between the target block 251 and the prediction 202. The first category is usually performed in two steps. The motion vectors between the target (current) block and the reference frames are estimated. Then the motion information is coded and explicitly sent to the decoder. At the decoder, the motion information is decoded and used to predict the target block from previously decoded reconstructed reference frames.

The second category refers to the class of motion estimation methods that do not code motion information explicitly in the bitstream. Instead, the same motion information derivation is performed at the decoder as that performed at the encoder. One practical implicit motion estimation scheme was to use a spatial-temporal auto-regressive model, where the least-square prediction (LSP) is applied. Another common and popular approach is to use a patch-based model, such as the template matching prediction approach shown in FIG. 1.

In general, explicit motion estimation can be more accurate, especially for fast and unnatural motions, but at the cost of coding bits for motion vectors. Implicit motion estimation is more suitable for slow and natural motion, but it places a complexity burden at the decoder since it has to compute the motion information as the encoder does.

**MPEG-4 AVC Standard Inter-Prediction**

The MPEG-4 AVC Standard uses tree-structured hierarchical macroblock partitions. Inter-coded 16x16 pixel macroblocks may be broken into macroblock partitions of sizes 16x8, 8x16, or 8x8. Macroblock partitions of 8x8 pixels are also known as sub-macroblocks. Sub-macroblocks may also be broken into sub-macroblock partitions of sizes 8x4, 4x8, and 4x4. An encoder may select how to divide the macroblock into partitions and sub-macroblock partitions based on the characteristics of a particular macroblock, in order to maximize compression efficiency and subjective quality.

Multiple reference pictures may be used for inter-prediction, with a reference picture index coded to indicate which of the multiple reference pictures is used. For P pictures (or P slices), only single directional prediction is used, and the allowable reference pictures are managed in List 0. In B pictures (or B slices), two lists of reference pictures are managed, List 0 and List 1. In B pictures (or B slices), single directional prediction using either List 0 or List 1 is allowed, or bi-prediction using both List 0 and List 1 is allowed. When bi-prediction is used, the List 0 and the List 1 predictors are averaged together to form a final predictor.

Each macroblock partition may have independent reference picture indices, prediction type (List 0, List 1, bipred), and an independent motion vector. Each sub-macroblock partition may have independent motion vectors, but all sub-macroblock partitions in the same sub-macroblock use the same reference picture index and prediction type.

In the MPEG-4 AVC Standard Joint Model (JM) reference software, a Rate-Distortion Optimization (RDO) framework is used for mode decision. For inter modes, motion estimation is separately considered from mode decision. Motion estimation is first performed for all block types of inter modes, then the mode decision is made by comparing the cost of each inter mode and intra mode. The mode with the minimal cost is selected as the best mode. The following modes relate to a P-frame and a B-frame, respectively.

P-frame:

$$MODE \in \left\{ \begin{array}{l} INTRA\,4x4,\ INTRA\,16x16,\ SKIP, \\ 16x16,\ 16x8,\ 8x16,\ 8x8,\ 8x4,\ 4x8,\ 4x4 \end{array} \right\},$$

B-frame:

$$MODE \in \left\{ \begin{array}{l} INTRA\,4x4,\ INTRA\,16x16,\ \ DIRECT, \\ 16x16L0,\ 16x8L0,\ 8x16L0,\ \ 8x8L0,\ \ 8x4L0, \\ 4x8L0,\ 4x4L0,\ 16x16L1,\ 16x8L1,\ 8x16L1, \\ 8x8L1,\ 8x4L1,\ 4x8L1,\ 4x4L1,16x16BI,16x8BI,8x16BI, \\ 8x8BI,\ 8x4BI,\ 4x8BI,\ 4x4BI \end{array} \right\},$$

**Template Matching**

Template matching prediction is one way to predict target pixels without sending motion vectors. Given a target block of a frame, a target pixel in the block is determined by finding an optimum pixel from a set of reference samples, where the adjacent pixels of the optimum pixels have the highest correlation with those of the target pixels. Those adjacent pixels of the target pixels are called a template. The prior art shows that the template is always taken from reconstructed surrounding pixels of the target pixels, as shown in FIG. 1. The template matching prediction can be applied for both intra and inter prediction.

In the case of inter-prediction, the template matching process can be seen as a motion vector search at the decoder side. Here, template matching is performed very similar to traditional motion estimation techniques. Motion vectors are evaluated by calculating a cost function for accordingly displaced template-shaped regions in the reference frames. The best motion vector for the template is then used to predict the target area. Only those areas of the image where already a reconstruction or at least a prediction signal exists are accessed for the search. Thus, the decoder is able to execute the template matching process and predict the target area without additional side information.

Template matching can predict pixels in a target block without transmission of motion vectors. It is expected that the prediction performance of template matching prediction is comparable to that of the block matching scheme if the correlation between a target block and its template is high. In the prior art, the template is always taken from the reconstructed spatial neighboring pixels of the target pixels. The neighboring pixels sometimes have low correlations with the target pixels, thus the performance of template matching prediction can be lower than traditional block matching scheme.

**Multiple-hypothesis Motion Compensated Prediction (MCP)**

Multiple-hypothesis is the combination of multiple prediction candidates to make the prediction signals of a target block less noisy, or more correlated to the target block. Bi-prediction is the most common case of multiple-hypothesis. In the prior art, multiple-hypothesis motion compensated prediction can be classified into two categories, along with explicit prediction and implicit prediction. In the first category, all motion vectors are explicitly transmitted for each hypothesis motion compensated prediction. In the second category, no motion vector is embedded in the bitstream, such as template matching averaging. The disadvantage of the first approach is the bitrate overhead for motion. The disadvantage of the second approach is the inaccuracy introduced by the outliers that are possibly involved because the matching process is based on the neighboring pixels.

Template matching prediction is illustrated for example in the following document:

KAMP S ET AL: "Decoder-side MV derivation with multiple ref pics", 33. VCEG MEETING; 83. MPEG MEETING; 12-1-2008 - 13-1-2008; ANTALYA; (VIDEO CODING EXPERTS GROUP OF ITU-T SG.16), no. VCEG-AH15, 12 January 2008 (2008-01-12), XP030003553.

Document WO 2009/110672 A1 discloses a method and an apparatus for encoding and decoding an image for generating a first prediction block of a current block of a current image and using the first prediction block to generate a second prediction block. An encoder encodes the current block based on at least one of the first and second prediction blocks. This document was published after the filing date of the present application.

SUMMARY

These and other drawbacks and disadvantages of the prior art are addressed by the present principles, which are directed to methods and apparatus for template matching prediction (TMP) in video encoding and decoding.

According to an aspect of the present principles, there is provided an apparatus as defined in claim 1.

According to another aspect of the present principles, there is provided a method as defined in claim 2.

According to yet another aspect of the present principles, there is provided an apparatus as defined in claim 3.

According to a still further aspect of the present principles, there is provided a method as defined in claim 4.

These and other aspects, features and advantages of the present principles will become apparent from the following detailed description of exemplary embodiments, which is to be read in connection with the accompanying drawings.

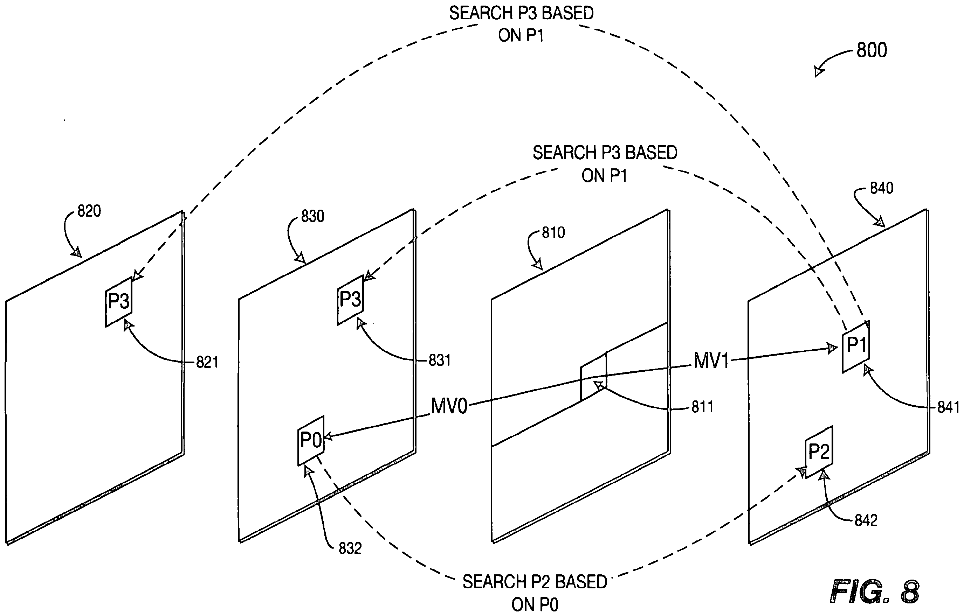

The invention is defined in the appended claims. Enabling disclosure for the invention as defined in the claims is found in the embodiments described in Figures 8 to 10. The remaining embodiments are to be understood as illustrative examples which do not describe parts of the present invention as defined in the claims.

BRIEF DESCRIPTION OF THE DRAWINGS

The present principles may be better understood in accordance with the following exemplary figures, in which:

FIG. 1 is a diagram showing an example of an implicit motion estimation scheme involving template matching prediction;

FIG. 2 is a diagram showing an example of an explicit motion estimation scheme involving block matching;

FIG. 3 is a block diagram showing an exemplary video encoder to which the present principles may be applied, in accordance with an embodiment of the present principles;

FIG. 4 is a block diagram showing an exemplary video decoder to which the present principles may be applied, in accordance with an embodiment of the present principles;

FIG. 5 is a diagram showing an example of template matching prediction (TMP) scheme combined with single prediction (uni-prediction), in accordance with an embodiment of the present principles;

FIG. 6 is a flow diagram showing a video encoding method using template matching prediction with single reference list prediction (uni-prediction), in accordance with an embodiment of the present principles;

FIG. 7 is a flow diagram showing a video decoding method using template matching prediction with single reference list prediction (uni-prediction), in accordance with an embodiment of the present principles;

FIG. 8 is a diagram showing an example of template matching prediction combined with bi-prediction, in accordance with an embodiment of the present principles;

FIG. 9 is a flow diagram showing a video encoding method using template matching prediction with bi-prediction, in accordance with an embodiment of the present principles;

FIG. 10 is a flow diagram showing a video decoding method using template matching prediction with bi-prediction, in accordance with an embodiment of the present principles;

FIG. 11 is a flow diagram showing another video encoding method using template matching prediction with bi-prediction, in accordance with an embodiment of the present principles;

FIG. 12 is a flow diagram showing another video decoding method using template matching prediction with bi-prediction, in accordance with an embodiment of the present principles;

FIG. 13 is a diagram showing an example of template matching prediction with multiple reference pictures, in accordance with an embodiment of the present principles, in accordance with an embodiment of the present principles;

FIG. 14 is a flow diagram showing a video encoding method using template matching prediction with multiple reference pictures, in accordance with an embodiment of the present principles;

FIG. 15 is a flow diagram showing a video decoding method using template matching prediction with multiple reference pictures, in accordance with an embodiment of the present principles;

FIG. 16 is a flow diagram showing another video encoding method using template matching prediction for intra prediction, in accordance with an embodiment of the present principles; and

FIG. 17 is a flow diagram showing another video decoding method using template matching prediction with multiple reference pictures, in accordance with an embodiment of the present principles.

## DETAILED DESCRIPTION

The present principles are directed to methods and apparatus for template matching prediction (TMP) in video encoding and decoding.

All examples and conditional language recited herein are intended for pedagogical purposes to aid the reader in understanding the present principles and the concepts contributed by the inventor(s) to furthering the art, and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment" or "an embodiment" of the present principles, as well as other variations thereof, means that a particular feature, structure, characteristic, and so forth described in connection with the embodiment is included in at least one embodiment of the present principles. Thus, the appearances of the phrase "in one embodiment" or "in an embodiment", as well any other variations, appearing in various places throughout the specification are not necessarily all referring to the same embodiment.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

Moreover, it is to be appreciated that while one or more embodiments of the present principles are described herein with respect to the MPEG-4 AVC standard, the present principles are not limited to solely this standard and, thus, may be utilized with respect to other video coding standards, recommendations, and extensions thereof, including extensions of the MPEG-4 AVC standard.

Further, it is to be appreciated that the terms "prediction", "predictor", and "hypothesis" are interchangeably used herein.

Also, it is to be appreciated that the term "block" as used herein refers to any of a macroblock, a macroblock partition, a sub-macroblock, and a sub-macroblock partition. Moreover, the term "block" may also refer to, for example, a wedge segmented from any of a macroblock, a macroblock partition, a sub-macroblock, and a sub-macroblock partition.

Additionally, it is to be appreciated that the phrases "explicit coding" and "explicit decoding" respectively refer to the cases where encoding or decoding is performed such that corresponding syntax relating to the encoding or decoding is included in a bitstream (e.g., the bitstream including the video content to which the syntax corresponds or a separate bitstream(s)). In contrast, the phrases "implicit coding" and "implicit decoding" respectively refer to the cases where encoding or decoding is performed such that corresponding syntax relating to the encoding or decoding is not included in a bitstream (e.g., the bitstream including the video content to which the syntax corresponds or a separate bitstream(s)). Rather, the corresponding syntax may be derived from other syntax, and so forth.

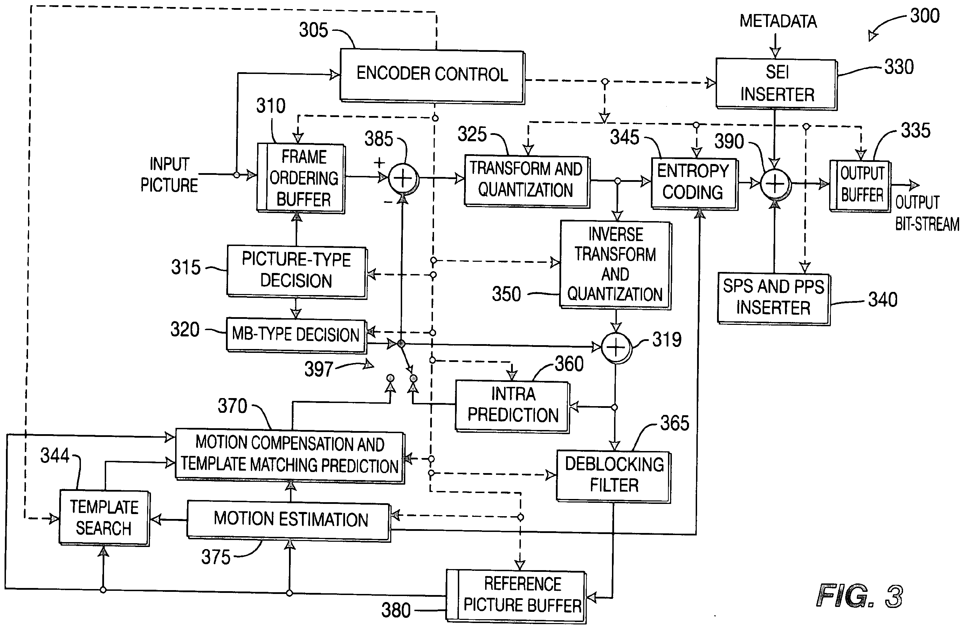

Turning to FIG. 3, an exemplary video encoder to which the present principles may be applied is indicated generally by the reference numeral 300.

The video encoder 300 includes a frame ordering buffer 310 having an output in signal communication with a non-inverting input of a combiner 385. An output of the combiner 385 is connected in signal communication with a first input of a transformer and quantizer 325. An output of the transformer and quantizer 325 is connected in signal communication with a first input of an entropy coder 345 and a first input of an inverse transformer and inverse quantizer 350. An output of the entropy coder 345 is connected in signal communication with a first non-inverting input of a combiner 390. An output of the combiner 390 is connected in signal communication with a first input of an output buffer 335.

A first output of an encoder controller 305 is connected in signal communication with a second input of the frame ordering buffer 310, a second input of the inverse transformer and inverse quantizer 350, an input of a picture-type decision module 315, a first input of a macroblock-type (MB-type) decision module 320, a second input of an intra prediction module 360, a second input of a deblocking filter 365, a first input of a motion compensator and template matching predictor 370, a first input of a motion estimator 375, and a second input of a reference picture buffer 380.

A second output of the encoder controller 305 is connected in signal communication with a first input of a Supplemental Enhancement Information (SEI) inserter 330, a second input of the transformer and quantizer 325, a second input of the entropy coder 345, a second input of the output buffer 335, and an input of the Sequence Parameter Set (SPS) and Picture Parameter Set (PPS) inserter 340.

An output of the SEI inserter 330 is connected in signal communication with a second non-inverting input of the combiner 390.

A first output of the picture-type decision module 315 is connected in signal communication with a third input of a frame ordering buffer 310. A second output of the picture-type decision module 315 is connected in signal communication with a second input of a macroblock-type decision module 320.

An output of the Sequence Parameter Set (SPS) and Picture Parameter Set (PPS) inserter 340 is connected in signal communication with a third non-inverting input of the combiner 390.

An output of the inverse quantizer and inverse transformer 350 is connected in signal communication with a first non-inverting input of a combiner 319. An output of the combiner 319 is connected in signal communication with a first input of the intra prediction module 360 and a first input of the deblocking filter 365. An output of the deblocking filter 365 is connected in signal communication with a first input of a reference picture buffer 380. An output of the reference picture buffer 380 is connected in signal communication with a second input of the motion estimator 375, a third input of the motion compensator and template matching predictor 370, and a first input of a template searcher 344. An output of the template searcher 344 is connected in signal communication with a fourth input of the motion compensator and template matching predictor 370. A first output of the motion estimator 375 is connected in signal communication with a second input of the motion compensator and template matching predictor 370. A second output of the motion estimator 375 is connected in signal communication with a third input of the entropy coder 345. A third output of the motion estimator 375 is connected in signal communication with a second input of the template searcher 344. A third output of the encoder controller 305 is connected in signal communication with a third input of the template searcher 344.

An output of the motion compensator and template matching predictor 370 is connected in signal communication with a first input of a switch 397. An output of the intra prediction module 360 is connected in signal communication with a second input of the switch 397. An output of the macroblock-type decision module 320 is connected in signal communication with a third input of the switch 397. The third input of the switch 397 determines whether or not the "data" input of the switch (as compared to the control input, i.e., the third input) is to be provided by the motion compensator and template matching predictor 370 or the intra prediction module 360. The output of the switch 397 is connected in signal communication with a second non-inverting input of the combiner 319 and with an inverting input of the combiner 385.

A first input of the frame ordering buffer 310 and an input of the encoder controller 305 are available as input of the encoder 100, for receiving an input picture. Moreover, a second input of the Supplemental Enhancement Information (SEI) inserter 330 is available as an input of the encoder 300, for receiving metadata. An output of the output buffer 335 is available as an output of the encoder 300, for outputting a bitstream.

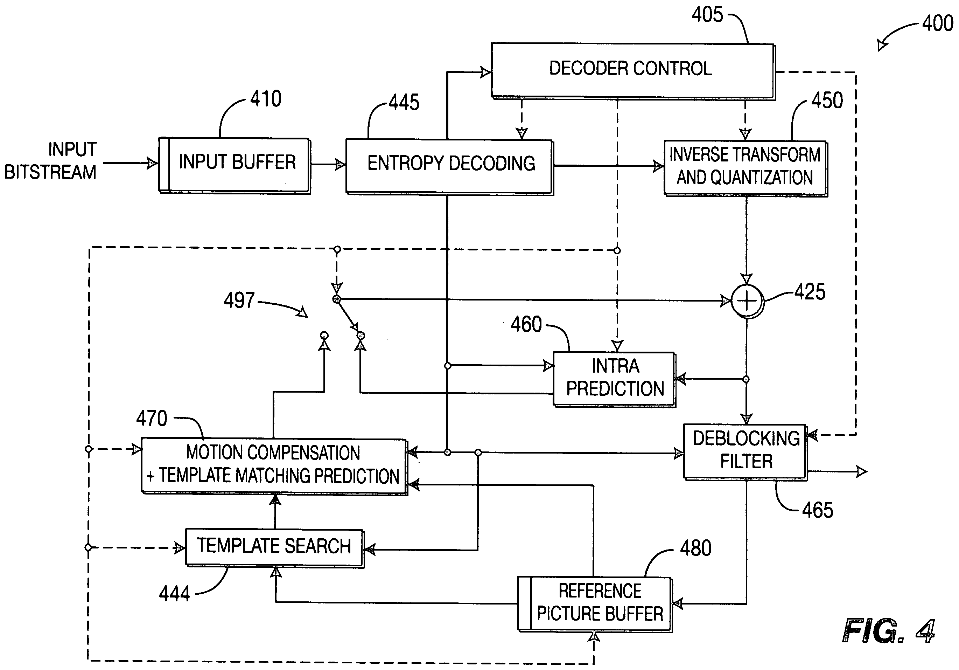

Turning to FIG. 4, an exemplary video decoder to which the present principles may be applied is indicated generally by the reference numeral 400.

The video decoder 400 includes an input buffer 410 having an output connected in signal communication with a first input of the entropy decoder 445. A first output of the entropy decoder 445 is connected in signal communication with a first input of an inverse transformer and inverse quantizer 450. An output of the inverse transformer and inverse quantizer 450 is connected in signal communication with a second non-inverting input of a combiner 425. An output of the combiner 425 is connected in signal communication with a second input of a deblocking filter 465 and a first input of an intra prediction module 460. A second output of the deblocking filter 465 is connected in signal communication with a first input of a reference picture buffer 480. An output of the reference picture buffer 480 is connected in signal communication with a first input of a template searcher 444. An output of the template searcher 444 is connected in signal communication with a second input of a motion compensator and template matching predictor 470.

A second output of the entropy decoder 445 is connected in signal communication with a third input of the motion compensator and template matching predictor 470, a first input of the deblocking filter 465, and a second input of the template searcher 444. A third output of the entropy decoder 445 is connected in signal communication with an input of a decoder controller 405. A first output of the decoder controller 405 is connected in signal communication with a second input of the entropy decoder 445. A second output of the decoder controller 405 is connected in signal communication with a second input of the inverse transformer and inverse quantizer 450. A third output of the decoder controller 405 is connected in signal communication with a third input of the deblocking filter 465. A fourth output of the decoder controller 405 is connected in signal communication with a second input of the intra prediction module 460, a first input of the motion compensator and template matching predictor 470, a second input of the reference picture buffer 480, and a third input of the template searcher 444.

An output of the motion compensator and template matching predictor 470 is connected in signal communication with a first input of a switch 497. An output of the intra prediction module 460 is connected in signal communication with a second input of the switch 497. An output of the switch 497 is connected in signal communication with a first non-inverting input of the combiner 425.

An input of the input buffer 410 is available as an input of the decoder 400, for receiving an input bitstream. A first output of the deblocking filter 465 is available as an output of the decoder 400, for outputting an output picture.

As noted above, the present principles are directed to methods and apparatus for template matching prediction (TMP) in video encoding and decoding.

Also a noted above, the prediction performance of template matching prediction is highly dependent on the correlation between the target block and its corresponding template. It is well known in the art to use the reconstructed pixels surrounding the target block, on the top and/or to the left, as shown in FIG. 1. However, utilizing template matching prediction in such a manner lessens encoder and decoder performance, especially when the template has a lower correlation with the targeted signal.

We recognize this limitation and therefore postulate an improved method of template matching prediction for implicit motion derivation. Thus, we describe a new template matching technique for multi-hypothesis inter-prediction, where motion information for some hypothesis is derived by template matching. In doing so, it is effectively a synergistic combination of template matching prediction and explicit motion prediction. This reduces the bitrate overhead for motion information, thus improving the coding efficiency. It is to be appreciated that while embodiments of the present principles are primarily described herein in the context of inter-prediction, given the teachings of the present principles provided herein, one of ordinary skill in this and related arts will readily understand that the present principles can also be applied for use with intra-prediction.

Thus, in accordance with the present principles, we describe methods and apparatus to solve the limitation of template matching prediction and the limitations of explicit and implicit multiple-hypothesis motion compensation predictions. Also, in particular, we describe using template matching prediction to do joint implicit and explicit prediction to improve multiple-hypothesis motion compensated prediction. In previous solutions, the template is taken from the reconstructed surrounding pixels of the target pixels/block. The surrounding pixels sometimes fail to represent the target pixels, thus the performance of template matching prediction can be lower than the traditional block matching scheme.

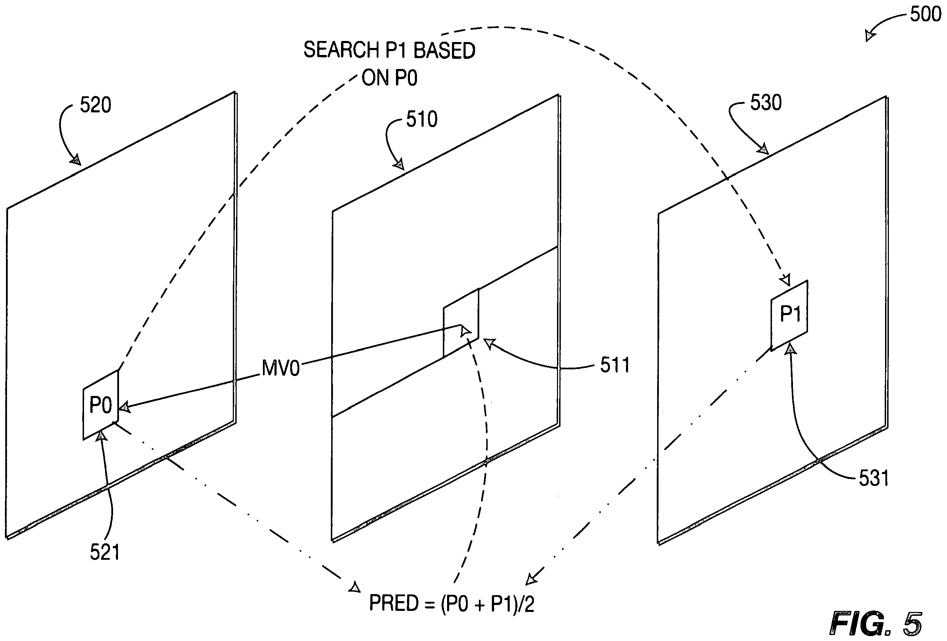

However, in accordance with one or more embodiments of the present principles, we describe methods and apparatus in which the template can be the prediction of the target pixels/block, as shown.in FIG. 5. Turning to FIG. 5, an example of template matching prediction (TMP) scheme combined with single prediction (uni-prediction) is indicated generally by the reference numeral 500. The template matching prediction scheme with single prediction 500 involves a current frame 510, a reference frame in List 0 520, a reference frame in List 1 530. The current frame 510 includes a target block 511. The reference frame in List 0 520 includes a prediction 521 (also designated "$P_0$"). The reference frame in List 1 530 includes a prediction 531(also designated "$P_1$"). A motion vector MV0 is used to denote the motion between the target block 511 and the prediction 521. If the prediction $P_0$ is very close to the target block, the performance of the template matching prediction can be very efficient by generating a template based on prediction $P_0$. In one embodiment, the template can be the inter prediction of the current block. In a second embodiment, the template can be the intra prediction of the current block. We can send some side information to indicate the exact prediction we use, or we can presume some default prediction. For example, in the first embodiment, we can presume that the inter prediction is always taken as the one derived from a motion vector predictor, or the motion vectors derived from skip or direct mode, or we can explicitly send the motion vector information for the prediction. In the second embodiment, we can always presume DC intra prediction is used or we can send the side information to indicate which intra prediction in the MPEG-4 AVC Standard is used. In a third embodiment, we can fill the template for the target block using the template search from spatial neighboring pixels.

**Multi-hypothesis Using Template Matching**

In this scheme, the template is achieved by inter-prediction by explicit motion estimation. The motion vector can be derived from a motion vector predictor, such as in the MPEG-4 AVC Standard, or can be explicitly sent in the bitstream. Then, we use the template to search the available reference pictures to obtain more motion compensated predictions. In this way, we can take advantage of both explicit motion estimation and implicit motion estimation. Since we can obtain multiple predictions from the same or different reference pictures without incurring more overhead, we can implement any number of hypotheses with this method.

In the following, we shall describe four different embodiments in which template matching prediction is used to improve multi-hypothesis motion compensated prediction. The first two embodiments are focused on B frames. The third embodiment is discussed from the view of multiple reference pictures. The present principles are also applicable to P frames. In the fourth embodiment, we describe how this methodology can also be used for intra picture coding.

**Embodiment 1:** TMP combined with single reference list prediction (uni-prediction)

In this embodiment, explicit motion estimation is done for one reference list to obtain the prediction data ($P_0$) for the target block, which is then used as a template to search in the other reference list to obtain the prediction data ($P_1$). Then, the final prediction ($P$) is the weighted average of $P_0$ and $P_1$. The weight can be a simple average (weight equal to 0.5) or other weights based on some distortion measurement, reference distance to the current picture, and so forth. The example is illustrated in FIG. 5.

This approach can be easily combined with a uni-prediction mode in the MPEG-4 AVC Standard such as, for example, but not limited to, mode MxNL0, or MxNL1, where M, N = 16, 8, 4, L0 and L1 represents the prediction coming from ListO or List1 respectively. We can add a flag in the macroblock level or submacroblock level to indicate whether uni-prediction or bi-prediction with template matching prediction is used for this mode.

**bi_tmp_flag** equal to 1 specifies that bi-prediction using uni-prediction and template matching prediction is applied. bi_tmp_flag equal to 0 specifies that uni-prediction is applied.

One example encoding procedure for 16x16L0 in accordance with an embodiment is illustrated as follows:

(1) Perform motion estimation for a macroblock 16x16 in reference List 0 to obtain $P_0$, and compute RDcost for $P_0$.
(2) Use $P_0$ as a template to search in reference List 1 to obtain $P_1$, and compute RDcost for $0.5(P_0 + P_1)$.
(3) Compare RDcost from (1) and (2) and set bi_tmp_flag. If the RDcost of (2) is smaller than that of (1), then set bi_tmp_flag=1; otherwise, set bi_tmp_flag=0.

The corresponding decoding procedure for 16x16L0 in accordance with an embodiment is illustrated as follows:

(1) Parse and decode the syntax of bi_tmp_flag, and motion vectors for 16x16L0.
(2) Perform motion compensation for a macroblock 16x16 in reference List 0 to obtain $P_0$.
(3) If bi_tmp_flag is equal to 0, then stop. Otherwise,
(4) perform: use $P_0$ as a template to search in reference List 1 to obtain $P_1$, and obtain the final prediction as $0.5(P_0 + P_1)$.

We should note that for template searching the template size could be different from the size of $P_0$. For example, we can perform template matching prediction using an 8x8 block size instead of a 16x16 block size for the search of $P_1$ with 16x16L0. Alternatively, we can perform template matching prediction using 20x20 in which we can increase the size of the template by incorporating the surrounding pixels of $P_0$.

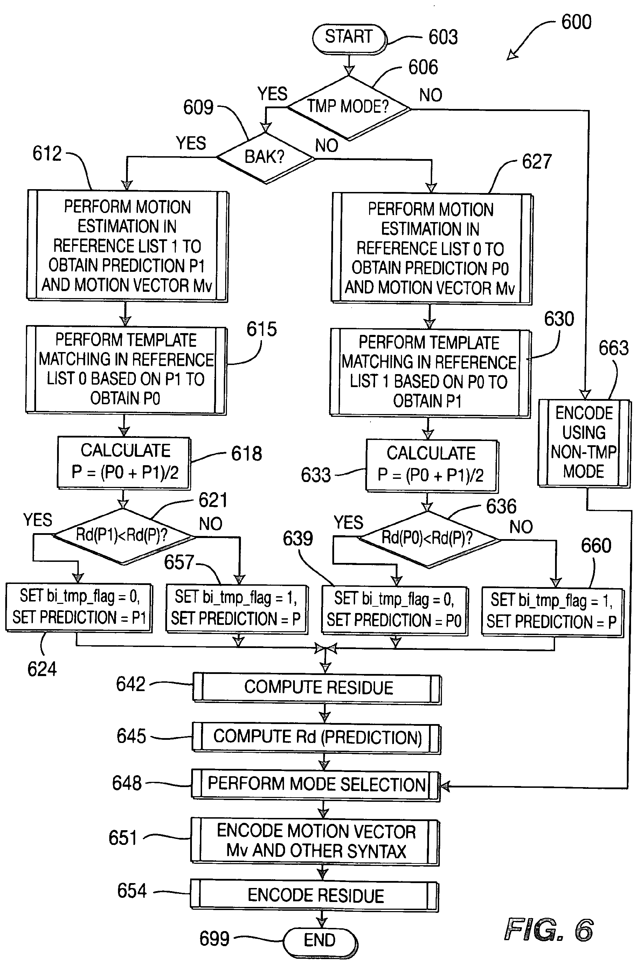

Turning to FIG. 6, a video encoding method using template matching prediction with single reference list prediction (uni-prediction) is indicated generally by the reference numeral 600. The method 600 includes a start block 603 that passes control to a decision block 606. The decision block 606 determines whether or not the current mode is template matching mode (TMP). If so, then control is passed to a decision block 609. Otherwise, control is passed to a function block 663.

The decision block 609 determines the explicit motion estimation direction (forward LO or backward L1). If explicit motion estimation direction is backward(BAK), control is passed to a function block 612. Otherwise, control is passed to a function block 627.

The function block 612 performs motion estimation in reference List 1 to obtain prediction $P_1$ and motion vector Mv, and passes control to a function block 615. The function block 615 performs template matching in reference List 0 based on $P_1$ to obtain $P_0$, and passes control to a function block 618. The function block 618 calculates $P = (P_0 + P_1)/2$, and passes control to a decision block 621. The decision block 621 determines whether or not the rate-distortion cost of $P_1$, namely Rd($P_1$), is less than the rate-distortion cost of $P$, namely Rd($P$). If so, then control is passed to a function block 624. Otherwise, control is passed to a function block 657.

The function block 624 sets bi_tmp_flag = 0, sets Prediction = $P_1$, and passes control to a function block 642.

The function block 642 computes the residue, and passes control to a function block 645. The function block 645 computes the rate-distortion of the prediction, namely Rd(Prediction), and passes control to a function block 648. The function block 648 performs mode selection, and passes control to a function block 651. The function block 651 encodes the motion vector Mv and other syntax, and passes control to a function block 654. The function block 654 encodes the residue, and passes control to an end block 699.

The function block 657 sets bi_tmp_flag = 1, sets Prediction = $P$, and passes control to the function block 642.

The function block 627 performs motion estimation in reference List 0 to obtain prediction $P_0$ and motion vector Mv, and passes control to a function block 630. The function block 630 performs template matching in reference List 1 based on $P_0$ to obtain $P_1$, and passes control to a function block 633. The function block 633 calculates $P = (P_0 + P_1)/2$, and passes control to a decision block 636. The decision block 636 determines whether or not the rate-distortion cost of $P_0$, namely Rd(P0), is less than the rate-distortion cost of $P$, namely Rd($P$). If so, then control is passed to a function block 639. Otherwise, control is passed to a function block 660.

The function block 639 sets bi_tmp_flag = 0, sets Prediction = $P_0$, and passes control to the function block 642.

The function block 660 sets bi_tmp_flag = 1, sets Prediction = $P$, and passes control to the function block 642.

The function block 663 encodes using a non-TMP mode(s), and passes control to the function block 648.

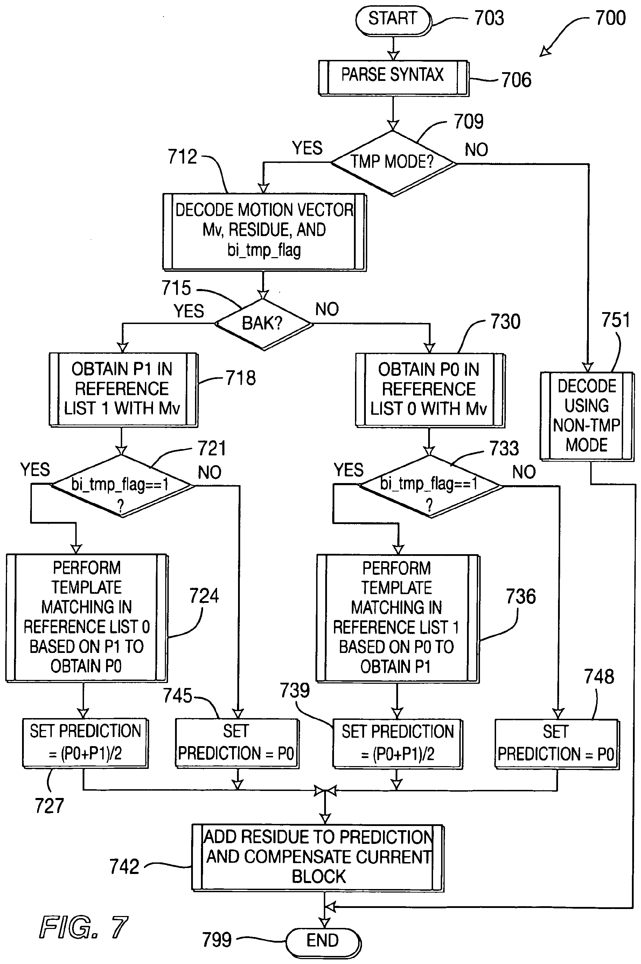

Turning to FIG. 7, a video decoding method using template matching prediction with single reference list prediction (uni-prediction) is indicated generally by the reference numeral 700. The method 700 includes a start block 703 that passes control to a function block 706. The function block 706 parses the syntax, and passes control to a decision block 709. The decision block 709 determines whether or not the current mode is template matching prediction (TMP) mode. If so, then control is passed to a function block 712. Otherwise, control is passed to a function block 751.

The function block 712 decodes the motion vector Mv, the residue, and bi_tmp_flag, and passes control to a decision block 715. The decision block 715 determines the explicit motion estimation direction. If the explicit motion estimation direction is backward (BAK), control is passed to a function block 718. Otherwise, control is passed to a function block 730.

The function block 718 obtains $P_1$ in reference List 1 with Mv, and passes control to a decision block 721. The decision block 721 determines whether or not bi_tmp_flag = 1. If so, then control is passed to a function block 724. Otherwise, control is passed to a function block 745.

The function block 724 performs template matching in reference List 0 based on $P_1$ to obtain P0, and passes control to a function block 727. The function block 727 calculates Prediction = $(P_0 + P_1)/2$, and passes control to a function block 742.

The function block 742 adds the residue to the prediction, compensates the current block, and passes control to an end block 799.

The function block 745 sets Prediction = $P_0$, and passes control to the function block 742.

The function block 730 obtains $P_0$ in reference List 0 with Mv, and passes control to a decision block 733. The decision block 733 determines whether or not bi_tmp_flag = 1. If so, then control is passed to a function block 736. Otherwise, control is passed to a function block 743.

The function block 736 performs template matching in reference List 1 based on $P_0$ to obtain $P_1$, and passes control to a function block 739. The function block 739 calculates Prediction = $(P_0 + P_1)/2$, and passes control to the function block 742.

The function block 748 sets Prediction = $P_0$, and passes control to the function block 742.

The function block 751 decodes using a non-TMP mode(s), and passes control to the end block 799.

**Embodiment 2:** TMP combined with bi-prediction

In one embodiment, the traditional bi-prediction is performed and then for each prediction in one reference list, we can find its corresponding template matching prediction in the other reference list. The final result can be 3 or 4 hypothesis predictions. We should note that in this approach, when multiple reference pictures are enabled, we do not limit the template matching prediction to the same reference picture as that for the explicit prediction. FIG. 8 shows such an example. Turning to FIG. 8, an example of template matching prediction combined with bi-prediction is indicated generally by the reference numeral 800. The template matching prediction 800 with bi-prediction involves a current frame 810, a reference frame 1 in List 0 820, a reference frame 0 in List 0 830, and a reference frame in List 1 840. The current frame 810 includes a target block 811, the reference frame 1 in List 0 820 includes a prediction 821 (also designated "$P_3$"), the reference frame 0 in List 0 830 include a prediction 831 (also designated "$P_3$") and a prediction 832 (also designated "$P_0$"), and the reference frame in List 1 840 includes a prediction 841 (also designated "$P_1$") and a prediction 842 (also designated "$P_2$"). We first perform motion estimation in reference List 0 to obtain $P_0$ and in reference List 1 to obtain $P_1$, then we use $P_0$ as a template to search in reference List 1 to obtain $P_2$, and $P_1$ as a template to search in reference List 0 to obtain $P_3$. When multiple reference pictures are used, $P_3$ and $P_0$ do not need to reside in the same reference picture. A motion vector MV0 is used to denote the motion between the target block 811 and the prediction 832, and a motion vector MV1 is used to denote the motion between the target block 811 and the prediction 841.

This approach can be easily combined with bi-prediction mode for the MPEG-4 AVC Standard such as, for example, but not limited to, mode MxNBI or direct mode, where M, N = 16, 8, 4, and BI represents Bi-prediction. We can add an indicator in the macroblock level or sub-macroblock level to specify how many hypotheses are performed with the use of template matching prediction for this mode.

**multi_tmp_mode** equal to 0 specifies that traditional bi-prediction is applied. multi_tmp_mode equal to 1 specifies that 3 hypotheses are applied, and traditional bi-prediction plus template matching prediction using List 0 prediction as the template and searching in List 1 are performed. multi_tmp_mode equal to 2 specifies that 3 hypothesis are applied, and traditional bi-prediction plus template matching prediction using List 1 prediction as the template and searching in List 0 are performed. multi_tmp_mode equal to 3 specifies that 4 hypothesis are applied, and traditional bi-prediction plus template matching prediction using List 1 prediction as the template, searching in List 0, template matching prediction using List 0 prediction as the template, and searching in List 1 are performed.

One example encoding procedure for 16x16BI in accordance with an embodiment is illustrated as follows:

(1) Perform motion estimation for a macroblock 16x16 in reference List 0 to obtain $P_0$ and in reference List 1 to obtain $P_1$, and compute RDcost for $(P_0 + P_1)/2$.
(2) Use $P_0$ as a template to search in reference List 1 to obtain $P_2$, and compute RDcost for $(P_0 + P_1 + P_2)/3$.
(3) Use $P_1$ as a template to search in reference List 0 to obtain $P_3$, and compute RDcost for $(P_0 + P_1 + P_3)/3$.
(4) Compute RDcost for $(P_0 + P_1 + P_2 + P_3)/4$.
(5) Compare RDcost from (1), (2), (3), and (4).

If RDcost of (1) is the smallest, then set multi_tmp_mode to 0.

If RDcost of (2) is the smallest, then set multi_tmp_mode to 1.

If RDcost of (3) is the smallest, then set multi_tmp_mode to 2.

If RDcost of (4) is the smallest, then set multi_tmp_mode to 3.

The corresponding decoding procedure for 16x16BI in accordance with an embodiment is illustrated as follows:

(1) Parse and decode the syntax of multi_tmp_mode and motion vectors for 16x16BI.
(2) Perform motion compensation for a macroblock 16x16 in reference List 0 to obtain $P_0$ and in reference List 1 to obtain $P_1$.
(3) If multi_tmp_mode is equal to 0, then the final prediction is $(P_0 + P_1)/2$. Otherwise,
(4) if multi_tmp_mode is equal to 1, then use $P_0$ as a template to search in reference List 1 to obtain $P_2$, and obtain the final prediction as $(P_0 + P_1 + P_2)/3$.
(5) If multi_tmp_mode is equal to 2, then use $P_1$ as a template to search in reference List 0 to obtain $P_3$, and obtain the final prediction as $(P_0 + P_1 + P_3)/3$.
(6) Otherwise, obtain the final prediction as $(P_0 + P_1 + P_2 + P_3)/4$.

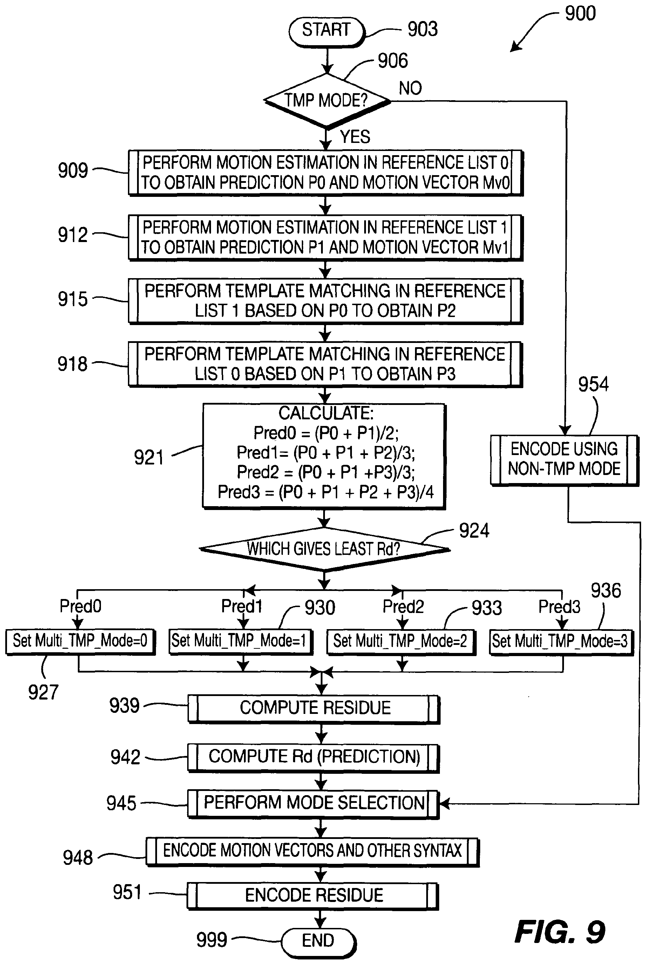

Turning to FIG. 9, a video encoding method using template matching prediction with bi-prediction is indicated generally by the reference numeral 900. The method 900 includes a start block 903 that passes control to a decision block 906. The decision block 906 determines whether or not the current mode is template matching prediction (TMP) mode. If so, then control is passed to a function block 909. Otherwise, control is passed to a function block 954.

The function block 909 performs motion estimation in reference List 0 to obtain prediction $P_0$ and motion vector Mv0, and passes control to a function block 912. The function block 912 performs motion estimation in reference List 1 to obtain prediction $P_1$ and motion vector Mv1, and passes control to a function block 915. The function block 915 performs template matching in reference List 1 based on P0 to obtain $P_2$, and passes control to a function block 918. The function block 918 performs template matching in reference List 0 based on $P_1$ to obtain P3, and passes control to a function block 921. The function block 921 calculates Pred0 = $(P_0 + P_1)/2$, Pred1 = $(P_0 + P_1 + P_2)/3$, Pred2 = $(P_0 + P_1 + P_3)/3$, and Pred3 = $(P_0 + P_1 + P_2 + P_3)/4$, and passes control to a decision block 924. The decision block 924 determines which of the prediction from among Pred0, Pred1, Pred2, and Pred3 provide the least rate-distortion (Rd). If Pred0 provides the least Rd, then control is passed to a function block 927. If Pred1 provides the least Rd, then control is passed to a function block 930. If Pred2 provides the least Rd, then control is passed to a function block 933. If Pred3 provides the least Rd, then control is passed to a function block 936.

The function block 927 sets Multi_TMP_Mode=0, and passes control to a function block 939.

The function block 930 sets Multi_TMP_Mode=1, and passes control to the function block 939.

The function block 933 sets Multi_TMP_mode=2, and passes control to the function block 939.

The function block 936 sets Multi_TMP_mode=3, and passes control to the function block 939.

The function block 939 computes the residue, and passes control to the function block 942. The function block 942 computes the rate-distortion cost of the prediction, namely Rd(Prediction), and passes control to a function block 945. The function block 945 performs mode selection, and passes control to a function block 948. The function block 648 encodes the motion vectors and other syntax, and passes control to a function block 651. The function block 951 encodes the residue, and passes control to an end block 699.

The function block 954 encodes using a non-TMP mode(s), and passes control to the function block 945.

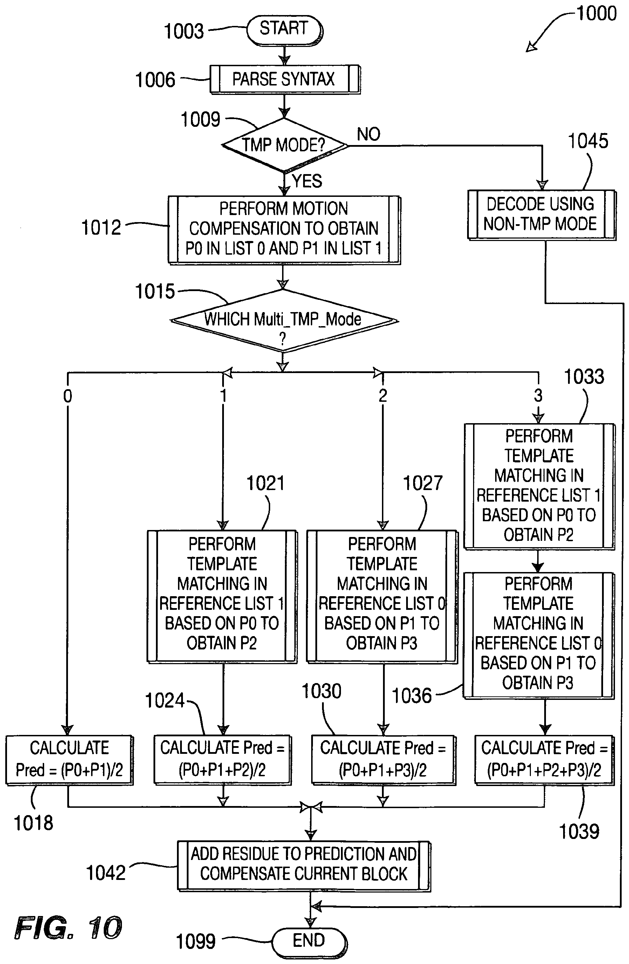

Turning to FIG. 10, a video decoding method using template matching prediction with bi-prediction is indicated generally by the reference numeral 1000. The method 1000 includes a start block 1003 that passes control to a function block 1006. The function block 1006 parses the syntax, and passes control to a decision block 1009. The decision block 1009 determines whether or not the current mode is a template matching prediction (TMP) mode. If so, then control is passed to a function block 1012. Otherwise, control is passed to a function block 1045.

The function block 1012 performs motion compensation to obtain $P_0$ in List 0 and $P_1$ in List 1, and passes control to a decision block 1015. The decision block 1015 determines which Multi_TMP_Mode. If mode 0 is Multi_TMP_Mode, then control is passed to a function block 1018. If mode 1 is Multi_TMP_Mode, then control is passed to a function block 1021. If mode 2 is Multi_TMP_Mode, then control is passed to a function block 1027. If mode 3 is Multi_TMP_Mode, then control is passed to a function block 1033.

The function block 1018 calculates Pred = $(P_0 + P_1)/2$, and passes control to a function block 1042.

The function block 1021 performs template matching in reference List 1 based on $P_0$ to obtain $P_2$, and passes control to a function block 1024. The function block 1024 calculates Pred = $(P_0 + P_1 + P_2)/2$, and passes control to the function block 1042.

The function block 1027 performs template matching in reference List 0 based on $P_1$ to obtain $P_3$, and passes control to a function block 1030. The function block 1030 calculates Pred = $(P_0 + P_1 + P_3)/2$, and passes control to the function block 1042.

The function block 1033 performs template matching in reference List 1 based on P0 to obtain P2, and passes control to a function block 1036. The function block 1036 performs template matching in reference List 0 based on $P_1$ to obtain $P_3$, and passes control to a function block 1039. The function block 1039 calculates Pred = $(P_0 + P_1 + P_2 + P_3)/2$, and passes control to the function block 1042.

The function block 1042 adds the residue to the prediction, compensates the current block, and passes control to an end block 1099.

The function block 1045 decodes using a non-TMP mode(s), and passes control to the end block 1099.

In another embodiment, we still use bi_tmp_flag, where bi_tmp_flag equal to 1 specifies the multi-hypothesis motion compensated prediction for maximal (up to 4) different motion compensated predictions.

In yet another embodiment, we extend the idea from embodiment one, but we set the template as the average of two predictors $P_2 = (P_0 + P_1)/2$, then we use this template to search the template matching prediction $P_3$ from the reference pictures in both lists. Finally, we average the template and template matching prediction, $(P_2 + P_3)/2$.

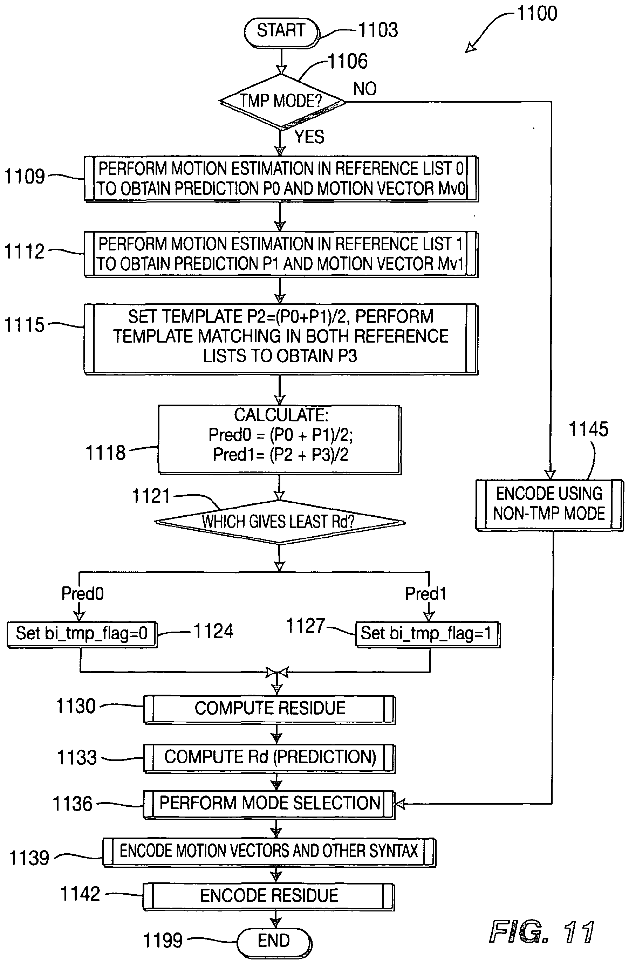

Turning to FIG. 11, another video encoding method using template matching prediction with bi-prediction is indicated generally by the reference numeral 900. The method 1100 includes a start block 1103 that passes control to a decision block 1106. The decision block 1106 determines whether or not the current mode is template matching prediction (TMP) mode. If so, then control is passed to a function block 1109. Otherwise, control is passed to a function block 1145.

The function block 1109 performs motion estimation in reference List 0 to obtain prediction $P_0$ and motion vector

Mv0, and passes control to a function block 1112. The function block 1112 performs motion estimation in reference List 1 to obtain prediction $P_1$ and motion vector Mv1, and passes control to a function block 1115. The function block 1115 sets Template $P_2 = (P_0 + P_1)/2$, performs template matching both reference lists to obtain $P_3$, and passes control to a function block 1118. The function block 1118 calculates Pred0 = $(P_0 + P_1)/2$ and Pred1 = $(P_2 + P_3)/2$, and passes control to a decision block 1121. The decision block 1121 determines which prediction provides the least rate-distortion (Rd). If Pred0 provides the least Rd, then control is passed to a function block 1124. If Pred1 provides the least Rd, then control is passed to a function block 1127.

The function block 1124 sets bi_tmp_flag = 0, and passes control to a function block 1130.

The function block 1130 computes the residue, and passes control to a function block 1133. The function block 1133 computes the rate-distortion for the prediction, namely Rd(Prediction), and passes control to a function block 1136. The function block 1136 performs mode selection, and passes control to a function block 1139. The function block 1139 encodes the motion vectors and other syntax, and passes control to a function block 1142. The function block 1142 encodes the residue, and passes control to an end block 1199.

The function block 1127 sets bi_tmp_flag = 1, and passes control to the function block 1130.

The function block 1145 encodes using a non-TMP mode(s), and passes control to the function block 1136.

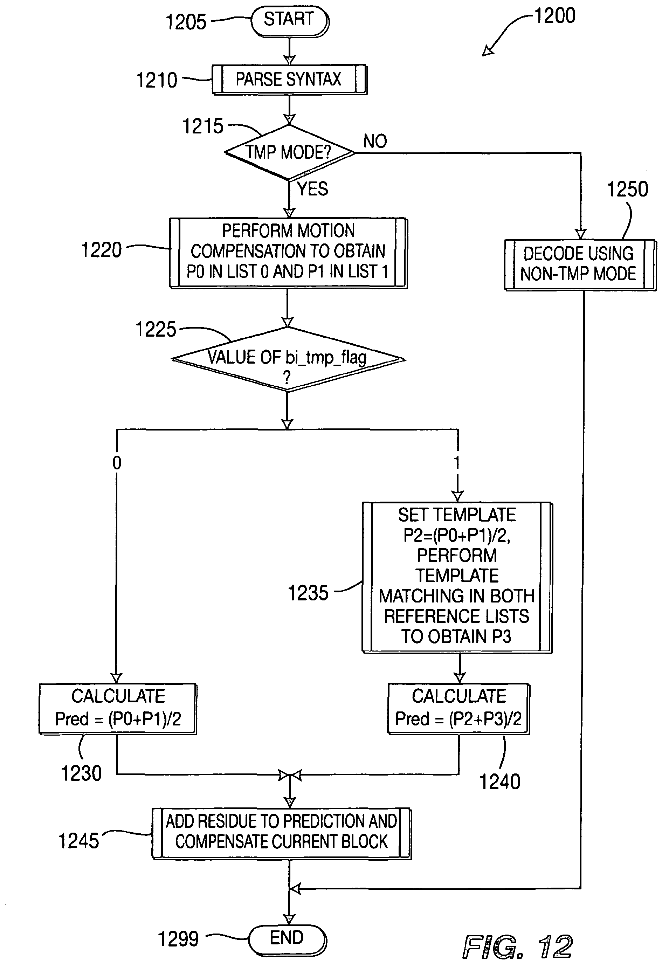

Turning to FIG. 12, another video decoding method using template matching prediction with bi-prediction is indicated generally by the reference numeral 1000. The method includes a start block 1205 that passes control to a function block 1210. The function block 1210 parses syntax, and passes control to a decision block 1215. The decision block 1215 determines whether or not the current mode is TMP mode. If so, then control is passed to a function block 1220. Otherwise, control is passed to a function block 1250.

The function block 1220 performs motion compensation to obtain $P_0$ in List 0 and $P_1$ in List 1, and passes control to a decision block 1225. The decision block 1225 determines whether the current value of bi_tmp_flag is equal to 0 or 1. If the current value of bi_tmp_flag is equal to 0, then control is passed to a function block 1230. Otherwise, control is passed to a function block 1235.

The function block 1230 calculates Pred = $(P_0 + P_1)/2$, and passes control to a function block 1245.

The function block 1245 adds the residue to the prediction, compensates the current block, and passes control to an end block 1299.

The function block 1235 sets template $P_2 = (P_0 + P_1)/2$, performs template matching in both reference lists to obtain $P_3$, and passes control to a function block 1240. The function block 1240 calculates Pred = $(P_2 + P_3)/2$, and passes control to the function block 1245.

The function block 1250 decodes using a non-TMP mode(s), and passes control to the end block 1299.

Similarly, we can obtain one or more template matching predictions with this method. Also, in another embodiment, one could obtain the final prediction by the following average: $(P_0 + P_1 + P_3)/3$. An additional embodiment would be to consider the N most similar patches to the $P_2$ average and the final predictor would be the averages: $(P_2 + P_3 + ... + P_N)/(N-1)$ or $(P_0 + P_1 + P_3 + ... + P_N)/N$ among other many possibilities.

We should note in this embodiment, if the template matching prediction is the same as the motion compensated prediction, we do not need to add the template matching prediction anymore, i.e., all multi-hypothesis motion compensated predictions should be different.

**Embodiment 3:** TMP combined with multiple reference pictures

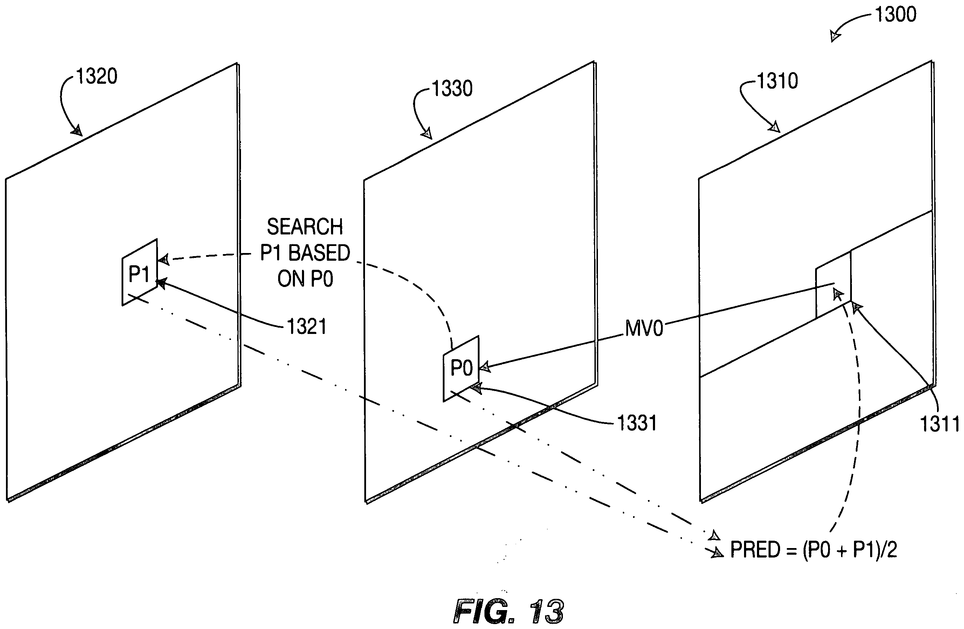

In the MPEG-4 AVC Standard, multiple reference pictures can be employed to further improve the coding efficiency. Thus, we do not need to limit our invention for different reference lists as described with respect to embodiment 1 and embodiment 2 above. We can obtain a template from one reference picture, and then perform a template matching prediction search in the same reference picture or other reference pictures that are or not in the same list of pictures. This can allow us to implement our invention with one reference list. It also allows us to implement our invention for any number of multi-hypothesis motion compensated predictions. Turning to FIG. 13, an example of template matching prediction with multiple reference pictures is indicated generally by the reference numeral 1300. The template matching prediction with multiple reference pictures 1300 involves a current frame 1310, a reference frame 1 in List 0 1320, and a reference frame 0 in List 0 1330. The current frame 1310 includes a target block 1311, the reference frame 1 in List 0 1320 includes a prediction 1321 (also designated "$P_1$"), and the reference frame 0 in List 0 1330 include a prediction 1331 (also designated "$P_0$"). A motion vector 1340 is used to denote the motion between the target block 1311 and the prediction 1331. We first perform motion estimation to obtain $P_0$ in ref frame 0 in reference List 0. We then use $P_0$ as a template to search in other reference pictures (ref frame 1) of reference List 0 to obtain $P_1$.

This approach can be easily combined with prediction mode in P pictures of the MPEG-4 AVC Standard when multiple reference pictures are used. For example, the approach can be used for mode MxN or skip mode, where M or N can be equal to any of 16, 8, and 4. We can add a flag at the macroblock level or sub-macroblock level to indicate how many hypotheses are performed with the use of template matching prediction for this mode.

**bi_tmp_flag** equal to 1 specifies that bi-prediction using uni-prediction and template matching prediction is applied. bi_tmp_flag equal to 0 specifies that uni-prediction is applied.

One example encoding procedure for 16x16 in accordance with an embodiment is illustrated as follows:

(1) Perform motion estimation for a macroblock 16x16 in reference List 0 to obtain $P_0$, and compute RDcost for $P_0$.
(2) Use $P_0$ as a template to search in other reference pictures of reference List 0 to obtain $P_1$, and compute the RDcost for $(P_0 + P_1)/2$.
(3) Compare the RDcost from (1) and (2) and set bi_tmp_flag. If the RDcost of (2) is smaller than that of (1), then set bi_tmp_flag=1; otherwise, set bi_tmp_flag=0.

The corresponding decoding procedure for 16x16 in accordance with an embodiment is illustrated as follows:

(1) Parse and decode the syntax of bi_tmp_flag, and motion vectors for 16x16.
(2) Perform motion compensation for a macroblock 16x16 in reference List 0 to obtain $P_0$.
(3) If bi_tmp_flag is equal to 0, then stop. Otherwise,
(4) perform: use $P_0$ as a template to search in other reference pictures of reference List 0 obtain $P_1$, and obtain the final prediction as $0.5(P_0 + P_1)$.

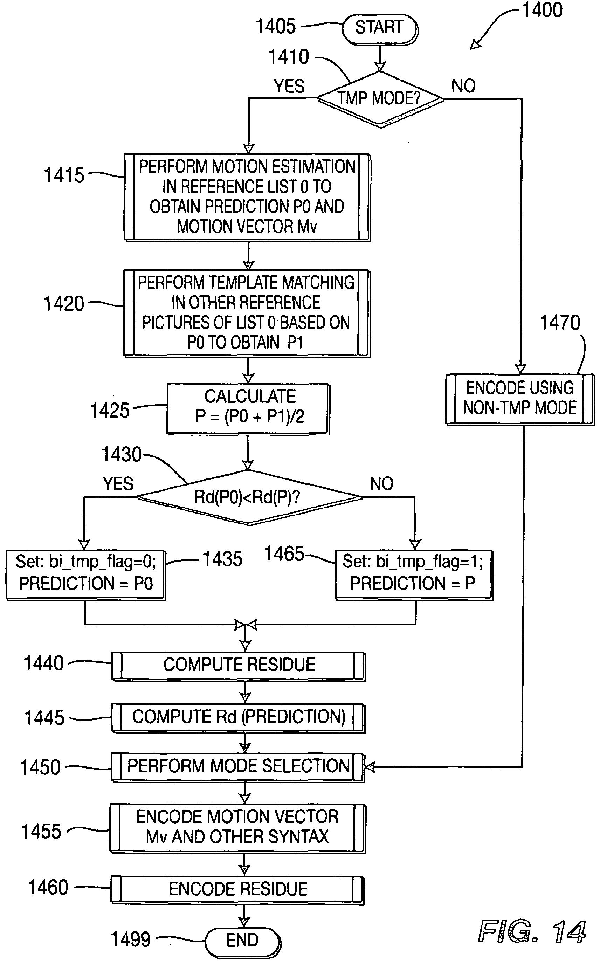

Turning to FIG. 14, a video encoding method using template matching prediction with multiple reference pictures is indicated generally by the reference numeral 1400. The method 1400 includes a start block 1405 that passes control to a decision block 1410. The decision block 1410 determines whether or not the current mode is TMP mode. If so, then control is passed to a function block 1415. Otherwise, control is passed to a function block 1470.

The function block 1415 performs motion estimation in reference List 0 to obtain prediction $P_0$ and motion vector Mv, and passes control to a function block 1420. The function block 1420 performs template matching in other reference pictures of List 0 based on $P_0$ to obtain $P_1$, and passes control to a function block 1425. The function block 1425 calculates $P = (P_0 + P_1)/2$, and passes control to a decision block 1430. The decision block 1430 determines whether the rate distortion cost of Prediction $P_0$ is less than the rate distortion cost of Prediction $P$, namely Rd($P_0$)<Rd($P$). If so, then control is passed to a function block 1435. Otherwise, control is passed to a function block 1465.

The function block 1435 sets bi_tmp_flag = 0, sets Prediction = $P_0$, and passes control to a function block 1440.

The function block 1440 computes the residue, and passes control to a function block 1445. The function block 1445 computes RD(Prediction), and passes control to a function block 1450. The function block 1450 performs mode selection, and passes control to a function block 1455. The function block 1455 encodes the motion vector Mv and other syntax, and passes control to a function block 1460. The function block 1460 encodes the residue, and passes control to an end block 1499.

The function block 1465 sets bi_tmp_flag = 1, sets Prediction = $P$, and passes control to the function block 1440.

The function block 1470 encodes using a non-TMP mode(s), and passes control to the function block 1450.

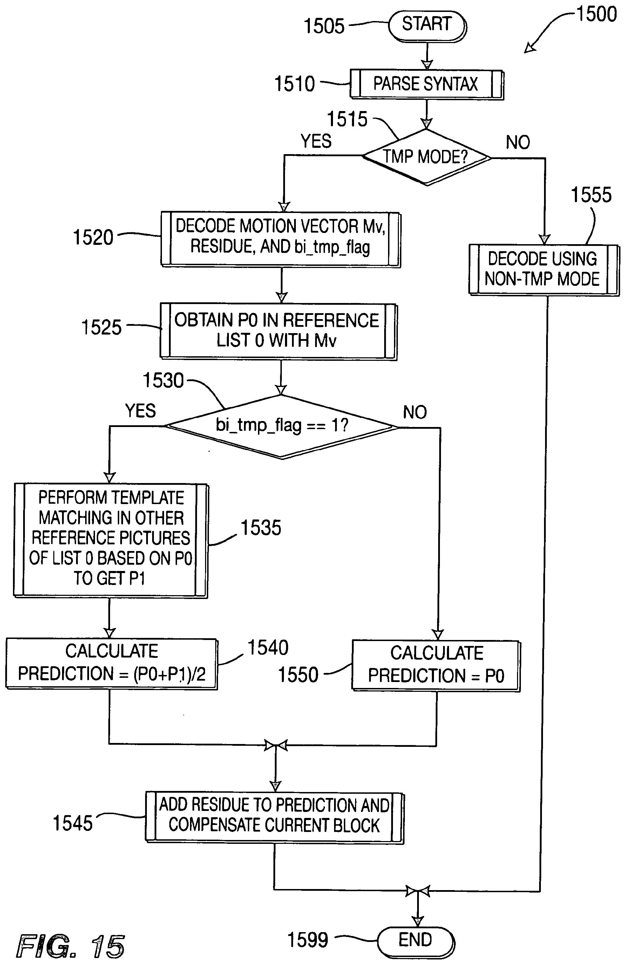

Turning to FIG. 15, a video decoding method using template matching prediction with multiple reference pictures is indicated generally by the reference numeral 1500. The method 1500 includes a start block 1505 that passes control to a function block 1510. The function block 1510 parses syntax, and passes control to a decision block 1515. The decision block 1515 determines whether or not the current mode is TMP mode. If so, then control is passed to a function block 1420. Otherwise, control is passed to a function block 1555.

The function block 1520 decodes the motion vector Mv, the residue, and bi_tmp_flag, and passes control to a function block 1525. The function block 1525 obtains P0 in reference List 0 with motion vector Mv, and passes control to a decision block 1530. The decision block 1530 determines whether or not B-TMP_Flag is equal to 1. If so, then control is passed to a function block 1535. Otherwise, control is passed to a function block 1550.

The function block 1535 performs template matching in other reference pictures of List 0 based on $P_0$ to obtain $P_1$, and passes control to a function block 1540. The function block 1540 calculates Prediction = $(P_0 + P_1)/2$, and passes control to a function block 1545.

The function block 1545 adds the residue to the prediction, compensates the current block, and passes control to an end block 1599.

The function block 1550 calculates Prediction = $P_0$, and passes control to the function block 1545.

The function block 1555 decodes using a non-TMP mode(s), and passes control to the end block 1599.

**Embodiment 4:** TMP combined with directional intra prediction or displaced intra prediction for intra picture coding.

In this embodiment, for intra picture coding, we can fill the template for the target block using directional intra prediction in the MPEG-4 AVC Standard, or using displaced intra prediction (DIP). Then, we search the template from the reconstructed pixels in the current picture. We then apply multiple hypothesis prediction by combining template searched predictions and directional/displaced intra prediction.

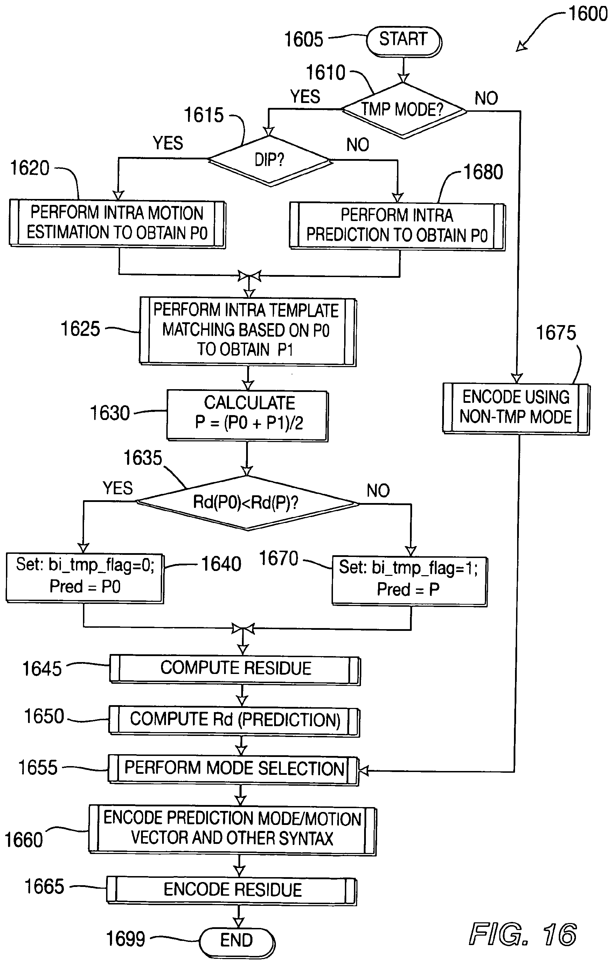

Turning to FIG. 16, another video encoding method using template matching prediction for intra prediction is indicated generally by the reference numeral 1600. The method 1600 includes a start block 1605 that passes control to a decision block 1610. The decision block 1610 determines whether or not the current mode is TMP mode. If so, then control is passed to a decision block 1615. Otherwise, control is passed to a function block 1675.

The decision block 1615 determines whether or not directional/displaced intra prediction (DIP) is allowed. If so, then control is passed to a function block 1620. Otherwise, control is passed to a function block 1680.

The function block 1620 performs intra motion estimation to obtain $P_0$, and passes control to a function block 1625.

The function block 1625 performs intra template matching (i.e., search the template from the reconstructed area of the current frame) based on $P_0$ to obtain $P_1$, and passes control to a function block 1630. The function block 1630 calculates $P = (P_0 + P_1)/2$, and passes control to a decision block 1635. The decision block 1635 determines whether or not the rate distortion cost of Prediction $P_0$ is less than the rate distortion cost of Prediction $P$, namely $Rd(P_0)<Rd(P)$. If so, then control is passed to a function block 1640. Otherwise, control is passed to a function block 1670.

The function block 1640 sets bi_tmp_flag=0, sets Pred = $P_0$, and passes control to a function block 1645.

The function block 1645 computes the residue, and passes control to a function block 1650. The function block 1650 computes Rd(Pred), and passes control to a function block 1655. The function block 1655 performs mode selection, and passes control to a function block 1660. The function block 1660 encodes the prediction mode, motion vector, and other syntax, and passes control to a function block 1665. The function block 1665 encodes the residue, and passes control to an end block 1699.

The function block 1670 sets bi_tmp_flag = 1, sets Pred = $P$, and passes control to the function block 1645.

The function block 1675 encodes using a non-TMP mode(s), and passes control to the function block 1655.

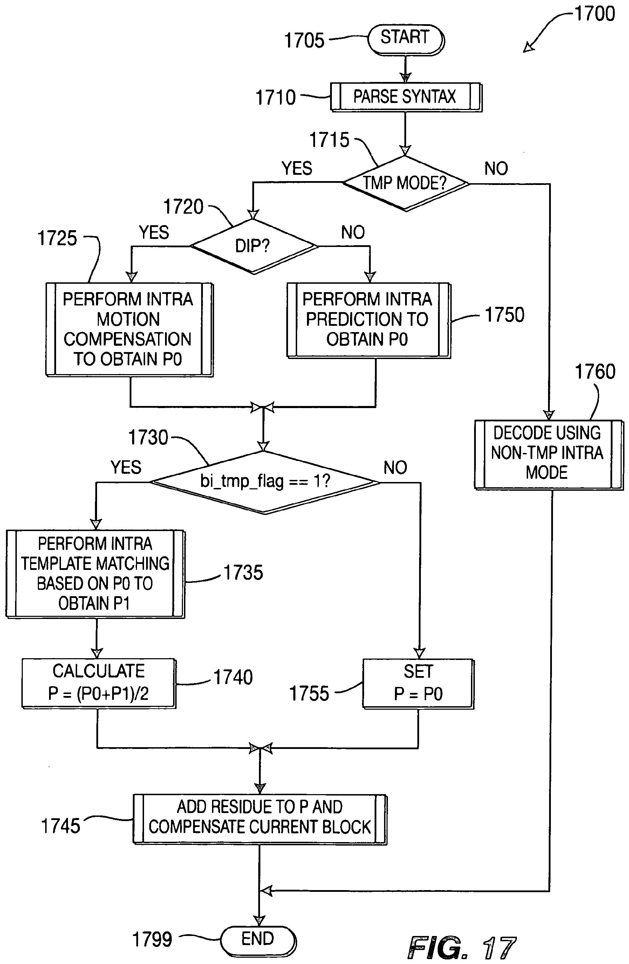

Turning to FIG. 17, another video decoding method using template matching prediction with multiple reference pictures is indicated generally by the reference numeral 1700. The method 1700 includes a start block 1705 that passes control to a function block 1710. The function block 1710 parses syntax, and passes control to a decision block 1715. The decision block 1715 determines whether or not the current mode is TMP mode. If so, then control is passed to a decision block 1720. Otherwise, control is passed to a function block 1760.

The decision block 1720 determines whether or not directional/displaced intra prediction (DIP) is enabled. If so, then control is passed to a function block 1725. Otherwise, control is passed to a function block 1750.

The function block 1725 performs intra motion compensation to obtain P0, and passes control to a decision block 1730.

The decision block 1730 determines whether or not bi_tmp_flag=1. If so, then control is passed to a function block 1735. Otherwise, control is passed to a function block 1755.

The function block 1735 performs intra template matching based on P0 to obtain P1, and passes control to a function block 1740. The function block 1740 calculates $P = (P_0 + P_1)/2$, and passes control to a function block 1745.

The function block 1745 adds the residue to $P$, compensates the current block, and passes control to an end block 1799.

The function block 1750 performs intra prediction to obtain $P_0$, and passes control to the decision block 1730.

The function block 1755 sets $P = P_0$, and passes control to the function block 1745.

The function block 1760 decodes using a non-TMP intra mode(s), and passes control to the end block 1799.

## Template Search Simplification

In accordance with an embodiment the present principles, the template search is performed at both an encoder and a decoder. The straightforward method is to use a full (brut force) search. However, the computational complexity for this method is quite significant. In order to reduce the complexity, we describe and propose several methods to simplify the searching algorithm. In one such embodiment, we use a fast search algorithm such as, for example, a diamond search, a logarithm search, an enhanced predictive zonal search (EPZS), and so forth. In a second of such embodiments, presuming that the motion is linear, we can derive the template search predictor from the motion vector that the template used, and scale the template search predictor according to the distance and direction from reference picture to target picture. We then use this predictor as the center and do a small refinement.

## Impact On Other Coding Blocks

## Motion Vector for TMP

In the MPEG-4 AVC Standard, the motion vector for the current block is predicted from the neighboring block. Thus, the value of the motion vector of the current block will affect the future neighboring blocks. This raises a question regarding the template searching block as to what motion vector we should use, since we have the explicit motion vector and template searched motion vectors. In the first embodiment, after the template search is done, we can retrieve the explicit motion vector for the template. This motion vector is used for future motion vector prediction. In the second embodiment, we presume the motion vector to be some predictor, such as 0, or the median predictor of the current block.

**Deblocking Filter**

For the deblocking filter, in the first embodiment, we can treat the template matching prediction block the same as an explicit motion estimation block, and use the motion vector for template matching prediction as described above. Then, the deblocking process is not changed. In the second embodiment, since the template matching prediction has different characteristic than the explicit motion estimation block, we can adjust the block strength, the filter type, and/or filter length accordingly.

**Independent Parsing**

To separate parsing from the decoding process, we cannot perform the template search in the parsing. Therefore, in the parsing process, for motion vector derivation for template matching prediction, if embodiment 1 of motion vector for TMP (as described above) is used, then we can use embodiment 2 for parsing that involves setting the second motion vector by its motion vector predictor, and use embodiment 1 for real decoding.

TABLE 1 shows exemplary slice header syntax, in accordance with an embodiment of the present principles. TABLE 2 shows exemplary macroblock layer syntax, in accordance with an embodiment of the present principles.

**TABLE 1**

| slice_header( ) { | C | Descriptor |
|---|---|---|
| first_ mb_in_slice | 2 | ue(v) |
| slice_type | 2 | ue(v) |
| pic_parameter_set_id | 2 | ue(v) |
| ... | | |
| if (slice type != I) | | |
| tmp_enable_flag | 2 | u(1) |
| ... | | |

**TABLE 2**

| macroblock_layer( ) { | C | Descriptor |
|---|---|---|
| mb_type | 2 | ue(v) \| ae(v) |
| if( MbPartPredMode( mb_type, 0) != Intra_4x4 && MbPartPredMode( mb_type, 0) ! = Intra_8x8 && MbPartPredMode( mb_type, 0) ! = Intra 16x16) | | |
| bi_tmp_flag | 2 | u(1) |
| ... | | |

The semantics of some of the syntax elements from TABLES 1 and 2 will now be described in further detail as follows:

**tmp_enable_flag** equal to 1 specifies that template matching prediction is enabled for the slice. tmp_enable_flag equal to 0 specifies that template matching prediction is not enabled for the slice.

**bi_tmp_flag** equal to 0 specifies template matching prediction is not enabled for the macroblock. bi_tmp_flag equal to 1 specifies template matching prediction is enabled for the macroblock. When bi_tmp_flag is equal to 1, uni-prediction and template matching prediction are applied for single (uni) prediction modes, and multi-hypothesis motion compensation prediction for maximal (up to 4) different motion compensated predictions is applied for bi-prediction modes.

A description will now be given of some of the many attendant advantages/features of the present invention, some of which have been mentioned above. For example, one advantage/feature is an apparatus having an encoder for encoding a target block in a picture by determining at least one predictor for the target block and respectively utilizing the at least one predictor as a template to search for at least one additional predictor for the target block.

Another advantage/feature is the apparatus having the encoder as described above, wherein the at least one predictor is an intra predictor, an inter predictor, or a combination thereof.

Yet another advantage/feature is the apparatus having the encoder wherein the at least one predictor is an intra predictor, an inter predictor, or a combination thereof as described above, wherein side information for the at least one predictor is at least one of implicitly coded and explicitly coded.

Still another advantage/feature is the apparatus having the encoder as described above, wherein the at least one additional predictor is obtained using a template matching prediction process and a multi-hypothesis motion compensation prediction process.

Moreover, another advantage/feature is the apparatus having the encoder wherein the at least one additional predictor is obtained using a template matching prediction process and a multi-hypothesis motion compensation prediction process as described above, wherein an explicit motion estimation process is used to determine the at least one predictor and the template matching prediction process is used to search for the at least one additional predictor with respect to multiple reference lists.

Further, another advantage/feature is the apparatus having the encoder wherein the explicit motion estimation process and the template matching prediction process are used as described above, wherein the explicit motion estimation process is constrained to a particular one of the multiple reference lists, and the template matching prediction process is constrained to a different one of the multiple reference lists.

Also, another advantage/feature is the apparatus having the encoder wherein the explicit motion estimation process and the template matching prediction process are used as described above, wherein the at least one predictor includes a first predictor and a second predictor obtained by respectively applying the explicit motion estimation process and an implicit motion estimation process with respect to a first reference list and a second reference list from among the multiple reference lists, and wherein the at least one additional predictor includes a first additional predictor and a second additional predictor obtained by respectively utilizing the first predictor and the second predictor in the template matching prediction process with respect to the second reference list and the first reference list.

Additionally, another advantage/feature is the apparatus having the encoder wherein the at least one predictor includes a first predictor and a second predictor and the at least one additional predictor includes a first additional predictor and a second additional predictor as described above, wherein the first predictor and the second additional predictor reside in different reference pictures.

Moreover, another advantage/feature is the apparatus having the encoder wherein the explicit motion estimation process and the template matching prediction process are used as described above, wherein the explicit motion estimation process is used in a particular one reference picture corresponding to a particular one of the multiple reference lists, and the template matching prediction process is used in the particular one reference picture or a different reference picture corresponding to a different one of the multiple reference lists.

Further, another advantage/feature is the apparatus having the encoder wherein the at least one additional predictor is obtained using a template matching prediction process and a multi-hypothesis motion compensation prediction process as described above, wherein the at least one prediction is derived or estimated using a motion vector predictor.

These and other features and advantages of the present principles may be readily ascertained by one of ordinary skill in the pertinent art based on the teachings herein. It is to be understood that the teachings of the present principles may be implemented in various forms of hardware, software, firmware, special purpose processors, or combinations thereof.

Most preferably, the teachings of the present principles are implemented as a combination of hardware and software. Moreover, the software may be implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit.

It is to be further understood that, because some of the constituent system components and methods depicted in the accompanying drawings are preferably implemented in software, the actual connections between the system components or the process function blocks may differ depending upon the manner in which the present principles are programmed. Given the teachings herein, one of ordinary skill in the pertinent art will be able to contemplate these and similar implementations or configurations of the present principles.

**Claims**

1. An apparatus, comprising:

   an encoder (300) for encoding a target block in a picture by determining a plurality of predictors for the target block using bidirectional prediction and respectively utilizing the plurality of predictors as templates in a template matching prediction process to search for a plurality of additional predictors for the target block, each additional predictor being a reference block in the other reference picture list than the reference picture list where the corresponding predictor was determined, and using the additional predictors in a multi-hypothesis motion compensation prediction process to predict the target block by selecting the set of predictors that produces a minimum rate distortion cost between either bidirectional predictors only, or at least one of the additional predictors used with the bidirectional predictors.

2. A method, comprising:

   encoding a target block in a picture by determining a plurality of predictors for the target block using bidirectional prediction and respectively utilizing the plurality of predictors as templates in a template matching prediction process to search for a plurality of additional predictors for the target block, each additional predictor being a reference block in the other reference picture list than the reference picture list where the corresponding predictor was determined, and using the additional predictors in a multi-hypothesis motion compensation prediction process to predict the target block by selecting the set of predictors that produces a minimum rate distortion cost between either bidirectional predictors only, or at least one of the additional predictors used with the bidirectional predictors.

3. An apparatus, comprising:

   a decoder (400) for decoding a target block in a picture by determining a plurality of predictors for the target block using bidirectional prediction and respectively utilizing the plurality of predictors as templates in a template matching prediction process to search for a plurality of additional predictors for the target block, each additional predictor being a reference block in the other reference picture list than the reference picture list where the corresponding predictor was determined, and using the additional predictors in a multi-hypothesis motion compensation prediction process to predict the target block by selecting, according to a decoded prediction mode for said target block, a set of predictors between either bidirectional predictors only, or at least one of the additional predictors used with the bidirectional predictors.

4. A method, comprising:

   decoding a target block in a picture by determining a plurality of predictors for the target block using bidirectional prediction and respectively utilizing the plurality of predictors as templates in a template matching prediction process to search for a plurality of additional predictors for the target block, each additional predictor being a reference block in the other reference picture list than the reference picture list where the corresponding predictor was determined, and using the additional predictors in a multi-hypothesis motion compensation prediction process to predict the target block by selecting, according to a decoded prediction mode for said target block, a set of predictors between either bidirectional predictors only, or at least one of the additional predictors used with the bidirectional predictors.

5. The apparatus of claim 1 or method of claim 2, wherein the predictors and the additional predictors reside in different reference pictures (1535).

6. The apparatus of claim 1 or method of claim 2, wherein an explicit motion estimation process (718, 730, 1012, 1220, 1525) is used in a particular one reference picture corresponding to a particular one of the reference picture lists, and the template matching prediction process (724, 736, 1021, 1027, 1235, 1535, 1735) is used in a particular one reference picture or a different reference picture corresponding to a different one of the reference picture lists.

7. A computer program product comprising instructions which, when the program is executed by a computer, cause the computer to carry out the method of any one of claims 4 and 5 to 6.

**Patentansprüche**

1. Vorrichtung, die umfasst:

    einen Codierer (300) zum Codieren eines Zielblocks in einem Bild durch Bestimmen mehrerer Prädiktoren für den Zielblock unter Verwendung einer bidirektionalen Vorhersage und jeweils Nutzen der mehreren Prädiktoren als Vorlagen in einem Vorlagengleichheitsprüfungs-Vorhersageprozess, um nach mehreren zusätzlichen Prädiktoren für den Zielblock zu suchen, wobei jeder zusätzliche Prädiktor ein Referenzblock in der anderen Referenzbildliste als der Referenzbildliste, in der der entsprechende Prädiktor bestimmt wurde, ist, und Verwenden der zusätzlichen Prädiktoren in einem Mehrhypothesen-Bewegungskompensations-Vorhersageprozess, um den Zielblock durch Auswählen derjenigen Menge von Prädiktoren, die zwischen entweder nur bidirektionalen Prädiktoren oder mindestens einem der zusätzlichen Prädiktoren, die mit den bidirektionalen Prädiktoren verwendet werden, minimale Ratenverzerrungskosten erzeugt, vorherzusagen.

2. Verfahren, das umfasst:

    Codieren eines Zielblocks in einem Bild durch Bestimmen mehrerer Prädiktoren für den Zielblock unter Verwendung einer bidirektionalen Vorhersage und jeweils Nutzen der mehreren Prädiktoren als Vorlagen in einem Vorlagengleichheitsprüfungs-Vorhersageprozess, um nach mehreren zusätzlichen Prädiktoren für den Zielblock zu suchen, wobei jeder zusätzliche Prädiktor ein Referenzblock in der anderen Referenzbildliste als der Referenzbildliste, in der der entsprechende Prädiktor bestimmt wurde, ist, und Verwenden der zusätzlichen Prädiktoren in einem Mehrhypothesen-Bewegungskompensations-Vorhersageprozess, um den Zielblock durch Auswählen derjenigen Menge von Prädiktoren, die zwischen entweder nur bidirektionalen Prädiktoren oder mindestens einem der zusätzlichen Prädiktoren, die mit den bidirektionalen Prädiktoren verwendet werden, minimale Ratenverzerrungskosten erzeugt, vorherzusagen.

3. Vorrichtung, die umfasst:

    einen Decodierer (400) zum Decodieren eines Zielblocks in einem Bild durch Bestimmen mehrerer Prädiktoren für den Zielblock unter Verwendung einer bidirektionalen Vorhersage und jeweils Nutzen der mehreren Prädiktoren als Vorlagen in einem Vorlagengleichheitsprüfungs-Vorhersageprozess, um nach mehreren zusätzlichen Prädiktoren für den Zielblock zu suchen, wobei jeder zusätzliche Prädiktor ein Referenzblock in der anderen Referenzbildliste als der Referenzbildliste, in der der entsprechende Prädiktor bestimmt wurde, ist, und Verwenden der zusätzlichen Prädiktoren in einem Mehrhypothesen-Bewegungskompensations-Vorhersageprozess, um den Zielblock durch Auswählen einer Menge von Prädiktoren zwischen entweder nur bidirektionalen Prädiktoren oder mindestens einem der zusätzlichen Prädiktoren, die mit den bidirektionalen Prädiktoren verwendet werden, in Übereinstimmung mit einer decodierten Vorhersagebetriebsart für den Zielblock vorherzusagen.

4. Verfahren, das umfasst:

    Decodieren eines Zielblocks in einem Bild durch Bestimmen mehrerer Prädiktoren für den Zielblock unter Verwendung einer bidirektionalen Vorhersage und jeweils Nutzen der mehreren Prädiktoren als Vorlagen in einem Vorlagengleichheitsprüfungs-Vorhersageprozess, um nach mehreren zusätzlichen Prädiktoren für den Zielblock zu suchen, wobei jeder zusätzliche Prädiktor ein Referenzblock in der anderen Referenzbildliste als der Referenzbildliste, in der der entsprechende Prädiktor bestimmt wurde, ist, und Verwenden der zusätzlichen Prädiktoren in einem Mehrhypothesen-Bewegungskompensations-Vorhersageprozess, um den Zielblock durch Auswählen einer Menge von Prädiktoren zwischen entweder nur bidirektionalen Prädiktoren oder mindestens einem der zusätzlichen Prädiktoren, die mit den bidirektionalen Prädiktoren verwendet werden, in Übereinstimmung mit einer decodierten Vorhersagebetriebsart für den Zielblock vorherzusagen.

5. Vorrichtung nach Anspruch 1 oder Verfahren nach Anspruch 2, wobei die Prädiktoren und die zusätzlichen Prädiktoren in unterschiedlichen Referenzbildern (1535) liegen.

6. Vorrichtung nach Anspruch 1 oder Verfahren nach Anspruch 2, wobei in einem bestimmten Referenzbild, das einer bestimmten der Referenzbildlisten entspricht, ein expliziter Bewegungsschätzungsprozess (718, 730, 1012, 1220, 1525) verwendet wird, und in einem bestimmten Referenzbild oder in einem anderen Referenzbild, das einer anderen der Referenzbildlisten entspricht, der Vorlagengleichheitsprüfungs-Vorhersageprozess (724, 736, 1021, 1027, 1235, 1535, 1735) verwendet wird.

7. Computerprogrammprodukt, das Anweisungen eines Programms umfasst, die, wenn das Programm durch einen Computer ausgeführt wird, veranlassen, dass der Computer das Verfahren nach einem der Ansprüche 4 und 5 bis 6 ausführt.

## Revendications

1. Appareil comprenant :

   un codeur (300) pour coder un bloc cible dans une image en déterminant une pluralité de prédicteurs pour le bloc cible à l'aide de la prédiction bidirectionnelle et en utilisant respectivement la pluralité de prédicteurs comme gabarits dans un processus de prédiction de correspondance de gabarit pour rechercher une pluralité de prédicteurs supplémentaires pour le bloc cible, chaque prédicteur supplémentaire étant un bloc de référence dans la liste d'images de référence autre que la liste d'images de référence dans laquelle le prédicteur correspondant a été déterminé, et en utilisant les prédicteurs supplémentaires dans un processus de prédiction de compensation de mouvement à plusieurs hypothèses pour prédire le bloc cible en sélectionnant l'ensemble de prédicteurs qui génère un coût de distorsion de débit minimum entre des prédicteurs bidirectionnels uniquement et au moins l'un des prédicteurs supplémentaires utilisés avec les prédicteurs bidirectionnels.

2. Procédé comprenant :

   le codage d'un bloc cible dans une image en déterminant une pluralité de prédicteurs pour le bloc cible à l'aide de la prédiction bidirectionnelle et en utilisant respectivement la pluralité de prédicteurs comme gabarits dans un processus de prédiction de correspondance de gabarit pour rechercher une pluralité de prédicteurs supplémentaires pour le bloc cible, chaque prédicteur supplémentaire étant un bloc de référence dans la liste d'images de référence autre que la liste d'images de référence dans laquelle le prédicteur correspondant a été déterminé, et en utilisant les prédicteurs supplémentaires dans un processus de prédiction de compensation de mouvement à plusieurs hypothèses pour prédire le bloc cible en sélectionnant l'ensemble de prédicteurs qui génère un coût de distorsion de débit minimum entre des prédicteurs bidirectionnels uniquement et au moins l'un des prédicteurs supplémentaires utilisés avec les prédicteurs bidirectionnels.

3. Appareil comprenant :

   un décodeur (400) pour décoder un bloc cible dans une image en déterminant une pluralité de prédicteurs pour le bloc cible à l'aide de la prédiction bidirectionnelle et en utilisant respectivement la pluralité de prédicteurs comme gabarits dans un processus de prédiction de correspondance de gabarit pour rechercher une pluralité de prédicteurs supplémentaires pour le bloc cible, chaque prédicteur supplémentaire étant un bloc de référence dans la liste d'images de référence autre que la liste d'images de référence dans laquelle le prédicteur correspondant a été déterminé, et en utilisant les prédicteurs supplémentaires dans un processus de prédiction de compensation de mouvement à plusieurs hypothèses pour prédire le bloc cible en sélectionnant, selon un mode de prédiction décodé pour ledit bloc cible, un ensemble de prédicteurs parmi des prédicteurs bidirectionnels uniquement ou au moins l'un des prédicteurs supplémentaires utilisés avec les prédicteurs bidirectionnels.

4. Procédé comprenant :

   le décodage d'un bloc cible dans une image en déterminant une pluralité de prédicteurs pour le bloc cible à l'aide de la prédiction bidirectionnelle et en utilisant respectivement la pluralité de prédicteurs comme gabarits dans un processus de prédiction de correspondance de gabarit pour rechercher une pluralité de prédicteurs supplémentaires pour le bloc cible, chaque prédicteur supplémentaire étant un bloc de référence dans la liste d'images de référence autre que la liste d'images de référence dans laquelle le prédicteur correspondant a été déterminé, et en utilisant les prédicteurs supplémentaires dans un processus de prédiction de compensation de mouvement à plusieurs hypothèses pour prédire le bloc cible en sélectionnant, selon un mode de prédiction décodé pour ledit bloc cible, un ensemble de prédicteurs entre des prédicteurs bidirectionnels uniquement ou au moins l'un des prédicteurs supplémentaires utilisés avec les prédicteurs bidirectionnels.

5. Appareil selon la revendication 1 ou procédé selon la revendication 2, dans lequel les prédicteurs et les prédicteurs supplémentaires résident dans des images de référence différentes (1535).

6. Appareil selon la revendication 1 ou procédé selon la revendication 2, dans lequel un processus d'estimation de mouvement explicite (718, 730, 1012, 1220, 1525) est utilisé dans une image de référence spécifique correspondant à une liste d'images de référence spécifique, et le processus de prédiction de correspondance de gabarit (724, 736, 1021, 1027, 1235,1535, 1735) est utilisé dans une image de référence spécifique ou une autre image de référence correspondant à une autre des listes d'images de référence.

7. Produit de programme informatique comprenant des instructions d'un programme qui, lorsque le programme est exécuté par un ordinateur, indiquent à l'ordinateur d'exécuter le procédé selon l'une des revendications 4 et 5 à 6.

**FIG. 1**

**FIG. 2**

300

METADATA → SEI INSERTER 330

335 OUTPUT BUFFER → OUTPUT BIT-STREAM

340 SPS AND PPS INSERTER

390 ENTROPY CODING 345

ENCODER CONTROL 305

325 TRANSFORM AND QUANTIZATION

350 INVERSE TRANSFORM AND QUANTIZATION

319

360 INTRA PREDICTION

365 DEBLOCKING FILTER

380 REFERENCE PICTURE BUFFER

385

INPUT PICTURE → FRAME ORDERING BUFFER 310

315 PICTURE-TYPE DECISION

320 MB-TYPE DECISION

397

370 MOTION COMPENSATION AND TEMPLATE MATCHING PREDICTION

375 MOTION ESTIMATION

344 TEMPLATE SEARCH

FIG. 3

FIG. 4

EP 2 269 379 B1

SEARCH P1 BASED
ON P0

MV0

PRED = (P0 + P1)/2

**FIG. 5**

sidebar EP 2 269 379 B1

START — 603

600

TMP MODE? — 606
YES      NO

BAK? — 609
YES      NO

612 — PERFORM MOTION ESTIMATION IN REFERENCE LIST 1 TO OBTAIN PREDICTION P1 AND MOTION VECTOR Mv

627 — PERFORM MOTION ESTIMATION IN REFERENCE LIST 0 TO OBTAIN PREDICTION P0 AND MOTION VECTOR Mv

PERFORM TEMPLATE MATCHING IN REFERENCE LIST 0 BASED ON P1 TO OBTAIN P0 — 615

PERFORM TEMPLATE MATCHING IN REFERENCE LIST 1 BASED ON P0 TO OBTAIN P1 — 630

663

CALCULATE P = (P0 + P1)/2 — 618

633 — CALCULATE P = (P0 + P1)/2

ENCODE USING NON-TMP MODE

$Rd(P1) < Rd(P)$? — 621
YES      NO

$Rd(P0) < Rd(P)$? — 636
YES      NO

639

660

SET bi_tmp_flag = 0, SET PREDICTION = P1

SET bi_tmp_flag = 1, SET PREDICTION = P — 657

SET bi_tmp_flag = 0, SET PREDICTION = P0

SET bi_tmp_flag = 1, SET PREDICTION = P

624

642 — COMPUTE RESIDUE

645 — COMPUTE Rd (PREDICTION)

648 — PERFORM MODE SELECTION

651 — ENCODE MOTION VECTOR Mv AND OTHER SYNTAX

654 — ENCODE RESIDUE

699 — END

FIG. 6

START ─── 703          ⟋ 700

PARSE SYNTAX ─── 706

709

712 ⟍                  YES ／ TMP MODE? ＼ NO

DECODE MOTION VECTOR
Mv, RESIDUE, AND
bi_tmp_flag

715 ⟍   YES ／ BAK? ＼ NO          730

OBTAIN P1 IN
REFERENCE
LIST 1 WITH Mv ─── 718

OBTAIN P0 IN
REFERENCE
LIST 0 WITH Mv          751

DECODE
USING
NON-TMP
MODE

721

YES ／ bi_tmp_flag==1 ＼ NO
    ?

733

YES ／ bi_tmp_flag==1 ＼ NO
    ?

PERFORM
TEMPLATE
MATCHING IN
REFERENCE LIST 0
BASED ON P1 TO
OBTAIN P0          724

PERFORM
TEMPLATE
MATCHING IN
REFERENCE LIST 1
BASED ON P0 TO
OBTAIN P1          736

748

SET PREDICTION
= (P0+P1)/2          745 ⟍

SET
PREDICTION = P0          739

SET PREDICTION
= (P0+P1)/2

SET
PREDICTION = P0

727

ADD RESIDUE TO PREDICTION
AND COMPENSATE CURRENT
BLOCK          742

*FIG. 7*

799 ─── END

SEARCH P3 BASED
ON P1

800

SEARCH P3 BASED
ON P1

840

820                830                810

P3                 P3                           P1

821                831         MV1

MV0              811

P0

841

P2

832                                             842

SEARCH P2 BASED
ON P0

*FIG. 8*

EP 2 269 379 B1

900

START — 903

906

TMP MODE? — NO

YES

909 — PERFORM MOTION ESTIMATION IN REFERENCE LIST 0 TO OBTAIN PREDICTION P0 AND MOTION VECTOR Mv0

912 — PERFORM MOTION ESTIMATION IN REFERENCE LIST 1 TO OBTAIN PREDICTION P1 AND MOTION VECTOR Mv1

915 — PERFORM TEMPLATE MATCHING IN REFERENCE LIST 1 BASED ON P0 TO OBTAIN P2

918 — PERFORM TEMPLATE MATCHING IN REFERENCE LIST 0 BASED ON P1 TO OBTAIN P3

921 — CALCULATE:
$Pred0 = (P0 + P1)/2;$
$Pred1 = (P0 + P1 + P2)/3;$
$Pred2 = (P0 + P1 + P3)/3;$
$Pred3 = (P0 + P1 + P2 + P3)/4$

954

ENCODE USING NON-TMP MODE

924 — WHICH GIVES LEAST Rd?

Pred0          Pred1 — 930          Pred2 — 933          Pred3          936

Set Multi_TMP_Mode=0     Set Multi_TMP_Mode=1     Set Multi_TMP_Mode=2     Set Multi_TMP_Mode=3

927

939 — COMPUTE RESIDUE

942 — COMPUTE Rd (PREDICTION)

945 — PERFORM MODE SELECTION

948 — ENCODE MOTION VECTORS AND OTHER SYNTAX

951 — ENCODE RESIDUE

999 — END

**FIG. 9**

1000

1003 — START

1006 — PARSE SYNTAX

1009 — TMP MODE? —NO—→ 1045 → DECODE USING NON-TMP MODE

YES

1012 — PERFORM MOTION COMPENSATION TO OBTAIN P0 IN LIST 0 AND P1 IN LIST 1

1015 — WHICH Multi_TMP_Mode ?

0

1

2

3

1033 — PERFORM TEMPLATE MATCHING IN REFERENCE LIST 1 BASED ON P0 TO OBTAIN P2

1021 — PERFORM TEMPLATE MATCHING IN REFERENCE LIST 1 BASED ON P0 TO OBTAIN P2

1027 — PERFORM TEMPLATE MATCHING IN REFERENCE LIST 0 BASED ON P1 TO OBTAIN P3

1036 — PERFORM TEMPLATE MATCHING IN REFERENCE LIST 0 BASED ON P1 TO OBTAIN P3

CALCULATE Pred = (P0+P1)/2

1024 — CALCULATE Pred = (P0+P1+P2)/2

1030 — CALCULATE Pred = (P0+P1+P3)/2

CALCULATE Pred = (P0+P1+P2+P3)/2

1018

1039

1042 — ADD RESIDUE TO PREDICTION AND COMPENSATE CURRENT BLOCK

**FIG. 10**

1099 — END

START — 1103

1106

TMP MODE? — NO

YES

1109 — PERFORM MOTION ESTIMATION IN REFERENCE LIST 0
TO OBTAIN PREDICTION P0 AND MOTION VECTOR Mv0

1112 — PERFORM MOTION ESTIMATION IN REFERENCE LIST 1
TO OBTAIN PREDICTION P1 AND MOTION VECTOR Mv1

1115 — SET TEMPLATE P2=(P0+P1)/2, PERFORM
TEMPLATE MATCHING IN BOTH REFERENCE
LISTS TO OBTAIN P3

1118 — CALCULATE:
Pred0 = (P0 + P1)/2;
Pred1 = (P2 + P3)/2

1145

1121 — WHICH GIVES LEAST Rd?

ENCODE USING
NON-TMP MODE

Pred0                                              Pred1

Set bi_tmp_flag=0 — 1124      1127 — Set bi_tmp_flag=1

1130 — COMPUTE RESIDUE

1133 — COMPUTE Rd (PREDICTION)

1136 — PERFORM MODE SELECTION

1139 — ENCODE MOTION VECTORS AND OTHER SYNTAX

1142 — ENCODE RESIDUE

1199 — END

1100

*FIG. 11*

FIG. 12

*FIG. 13*

1405 — START          1400

1410 — TMP MODE?
YES                    NO

1415 — PERFORM MOTION ESTIMATION
IN REFERENCE LIST 0 TO
OBTAIN PREDICTION P0 AND
MOTION VECTOR Mv

1420 — PERFORM TEMPLATE MATCHING
IN OTHER REFERENCE
PICTURES OF LIST 0 BASED ON
P0 TO OBTAIN P1

1470

1425 — CALCULATE
$P = (P0 + P1)/2$

ENCODE USING
NON-TMP MODE

1430 — $Rd(P0)<Rd(P)$?
YES                    NO

Set: bi_tmp_flag=0;
PREDICTION = P0          — 1435     1465 —     Set: bi_tmp_flag=1;
PREDICTION = P

1440 — COMPUTE RESIDUE

1445 — COMPUTE Rd (PREDICTION)

1450 — PERFORM MODE SELECTION

1455 — ENCODE MOTION VECTOR
Mv AND OTHER SYNTAX

1460 — ENCODE RESIDUE

1499 — END

*FIG. 14*

**FIG. 15**

1505 — START

1500

1510 — PARSE SYNTAX

1515 — TMP MODE?

YES

NO

1520 — DECODE MOTION VECTOR Mv, RESIDUE, AND bi_tmp_flag

1555

DECODE USING NON-TMP MODE

1525 — OBTAIN P0 IN REFERENCE LIST 0 WITH Mv

1530 — bi_tmp_flag == 1?

YES

NO

PERFORM TEMPLATE MATCHING IN OTHER REFERENCE PICTURES OF LIST 0 BASED ON P0 TO GET P1 — 1535

CALCULATE PREDICTION = (P0+P1)/2 — 1540

1550 — CALCULATE PREDICTION = P0

1545 — ADD RESIDUE TO PREDICTION AND COMPENSATE CURRENT BLOCK

1599 — END

1600

1605 — ( START )

1610 — TMP MODE?
YES / NO

1615 — DIP?
YES / NO

1620 — PERFORM INTRA MOTION ESTIMATION TO OBTAIN P0

1680 — PERFORM INTRA PREDICTION TO OBTAIN P0

1625 — PERFORM INTRA TEMPLATE MATCHING BASED ON P0 TO OBTAIN P1

1630 — CALCULATE
P = (P0 + P1)/2

1675 — ENCODE USING NON-TMP MODE

1635 — Rd(P0)<Rd(P)?
YES / NO

1640 — Set: bi_tmp_flag=0;
Pred = P0

1670 — Set: bi_tmp_flag=1;
Pred = P

1645 — COMPUTE RESIDUE

1650 — COMPUTE Rd (PREDICTION)

1655 — PERFORM MODE SELECTION

1660 — ENCODE PREDICTION MODE/MOTION VECTOR AND OTHER SYNTAX

1665 — ENCODE RESIDUE

1699 — ( END )

FIG. 16

FIG. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61044193 A

- WO 2009110672 A1

**Non-patent literature cited in the description**

- **KAMP S et al.** Decoder-side MV derivation with multiple ref pics. *33. VCEG MEETING; 83. MPEG MEETING; 12-1-2008 - 13-1-2008; ANTALYA; (VIDEO CODING EXPERTS GROUP OF ITU-T SG.16),* 12 January 2008